(19) Europäisches Patentamt
European Patent Office
Office européen des brevets

(11) EP 4 397 623 A1

(12) # EUROPEAN PATENT APPLICATION

published in accordance with Art. 153(4) EPC

(43) Date of publication:
**10.07.2024 Bulletin 2024/28**

(21) Application number: **22864265.8**

(22) Date of filing: **17.08.2022**

(51) International Patent Classification (IPC):
***C01B 33/145*** *(2006.01)* ***C08G 59/42*** *(2006.01)*
***C08G 77/14*** *(2006.01)* ***C08L 101/10*** *(2006.01)*
***C08L 63/00*** *(2006.01)*

(52) Cooperative Patent Classification (CPC):
**C01B 33/145; C08G 59/42; C08G 77/14; C08L 63/00; C08L 101/10**

(86) International application number:
**PCT/JP2022/031107**

(87) International publication number:
**WO 2023/032680 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 JP 2021141200**

(71) Applicant: **Nissan Chemical Corporation**
**Tokyo 103-6119 (JP)**

(72) Inventors:
- **ARAKI, Megumi**
**Sodegaura-shi, Chiba 299-0266 (JP)**
- **ONISHI, Hikaru**
**Sodegaura-shi, Chiba 299-0266 (JP)**
- **SUEMURA, Naohiko**
**Sodegaura-shi, Chiba 299-0266 (JP)**

(74) Representative: **Hoffmann Eitle**
**Patent- und Rechtsanwälte PartmbB**
**Arabellastraße 30**
**81925 München (DE)**

(54) **EPOXY GROUP-CONTAINING ORGANOSILICA SOL, EPOXY RESIN COMPOSITION AND PRODUCTION METHOD THEREOF**

(57) [Problem] To provide a silica sol which, as the dispersoid, contains silica particles that include an epoxy group or an epoxy group-containing organic group and an alkoxy group, and that is stably dispersed in an organic solvent; and a cured body-forming composition or epoxy cured body containing these silica sols. [Solution] This silica sol contains, as the dispersoid, silica particles that include an epoxy group or an epoxy group-containing organic group ($R^2$) and an alkoxy group ($OR^1$), and that have a 5-100nm average primary particle diameter measured with nitrogen adsorption (the BET method), contains organic matter as the dispersion medium, and also contains a basic substance, wherein, when the average particle diameter of the silica particles measured with dynamic light scattering (DLS) is 5-200 nm, the ratio of (average particle diameter with DLS) / (average primary particle diameter with BET) is 1.05-2.00, the epoxy group or epoxy group-containing organic group ($R^2$) and the alkoxy group ($OR^1$) have a molar ratio ($R^2$)/($OR^1$) of 0.1-2.0.



Processed by Luminess, 75001 PARIS (FR)

## Description

### TECHNICAL FIELD

The present invention relates to an epoxy group-containing organosilica sol, and a cured product-forming composition using the same.

### BACKGROUND ART

An organic solvent-dispersed silica sol can be combined with an organic resin to obtain a silica-containing resin composition, and this composition can contain a curing agent and be made into a resin molded product or a coating composition to be applied onto a film. When inorganic oxide particles such as silica are incorporated into a resin, the surface hardness, abrasion resistance, mechanical strength, heat resistance, corrosion resistance, coefficient of thermal expansion, bending strength, bending elastic modulus and the like are improved. In addition, when the silica particle diameter is 50 nm or less, a cured product can be formed without reducing transparency.

Inorganic oxide particles such as silica incorporated into an organic resin are made present in a resin matrix through covalent bonds due to their compatibility with organic resins or if polymerizable resins are used, the reaction with polymerizable groups in these resins, and thus further improvement in physical properties can be achieved. Therefore, a sol containing silica particles containing polymerizable groups on the silica particles is desirable.

For example, a production method of a composition of a polymerizable organic compound containing silica particles, the method including mixing an amine-containing organic solvent-dispersed silica sol and a polymerizable organic compound, has been disclosed (refer to Patent Document 1).

Patent Document 1 describes that colloidal silica particles are treated to become organophilic with an organic silane compound and the polymerizable organic compound is a liquid epoxy resin.

In addition, a liquid epoxy resin composition containing a modified epoxy resin modified with tris-(2,3-epoxypropyl)-isocyanurate and silica particles has been disclosed (refer to Patent Document 2).

### Prior Art Documents

#### Patent Documents

Patent Document 1: WO2010/058754
Patent Document 2: WO2009/008509

### SUMMARY OF THE INVENTION

#### Problem to be Solved by the Invention

An object of the present invention is to provide a silica sol that contains silica particles containing an epoxy group or an epoxy group-containing organic group, and an alkoxy group as dispersoids, and that is stably dispersed in an organic solvent, and a cured product-forming composition and an epoxy cured product containing this silica sol.

#### Means for Solving the Problem

The present invention provides, as a first aspect, a silica sol that contains silica particles containing an epoxy group or an epoxy group-containing organic group ($R^2$), and an alkoxy group ($OR^1$), and having an average primary particle diameter of 5 to 100 nm determined by a nitrogen gas adsorption method (BET method) as dispersoids, contains an organic substance as a dispersion medium, and also contains a basic substance,

wherein, when an average particle diameter of the silica particles determined by a dynamic light scattering method (DLS method) is 5 to 200 nm, a ratio of (average particle diameter determined by the DLS method)/(average primary particle diameter determined by the BET method) is 1.05 to 2.00,
wherein the silica particles contain 0.1 to 6.0 epoxy groups or epoxy group-containing organic groups ($R^2$)/$nm^2$ per unit area of a surface of the silica particles, and
wherein the silica particles contain 0.3 to 4.0 alkoxy groups ($OR^1$)/$nm^2$ per unit area of the surface of the silica particles, and a molar ratio ($R^2$)/($OR^1$) is 0.1 to 2.0,

as a second aspect, the silica sol according to the first aspect,
wherein the average particle diameter of the silica particles determined by the dynamic light scattering method after storage at 50°C for 7 days is in a range of 1.0 to 1.2 times a value before storage,
as a third aspect, the silica sol according to the first aspect or the second aspect, wherein the epoxy group is a glycidyl group or a 3,4-epoxycyclohexyl group,
as a fourth aspect, the silica sol according to any one of the first aspect to the third aspect,
wherein the dispersion medium is an organic substance having a carbonyl structure or an organic substance having an epoxy group,
as a fifth aspect, the silica sol according to the fourth aspect,
wherein the organic substance having a carbonyl structure in the dispersion medium is methyl ethyl ketone, methyl isobutyl ketone, diisopropyl ketone, diisobutyl ketone, cyclohexanone, ethyl acetate, butyl acetate, or propylene glycol monomethyl ether acetate,
as a sixth aspect, the silica sol according to the fourth aspect, wherein the organic substance having an epoxy group in the dispersion medium is a bisphenol A liquid epoxy compound, a bisphenol F liquid epoxy compound, or 3',4'-epoxycyclohexylmethyl 3',4'-epoxycyclohexanecarboxylate,
as a seventh aspect, the silica sol according to any one of the first aspect to the sixth aspect,
wherein the basic substance is an amine, ammonia, an inorganic alkaline compound, or a quaternary ammonium compound,
as an eighth aspect, the silica sol according to the seventh aspect,
wherein the amine is a secondary amine or tertiary amine having a total number of carbon atoms of 5 to 35,
as a ninth aspect, the silica sol according to any one of the first aspect to the eighth aspect,
wherein the silica particles further include a hydrolysate of at least one silane compound selected from the group consisting of Formula (1) to Formula (3):

$$R^3{}_aSi(R^4)_{4-a} \qquad \textbf{Formula (1)}$$

$$[R^5{}_bSi(R^6)_{3-b}]_2Y_c \qquad \textbf{Formula (2)}$$

$$R^7{}_dSi(R^8)_{4-d} \qquad \textbf{Formula (3)}$$

(in Formula (1), each $R^3$ is an alkyl group, a halogenated alkyl group, an alkenyl group, an aryl group, or an organic group having a (meth)acryloyl group, a mercapto group, an amino group, a ureido group, or a cyano group, and is bonded to a silicon atom through a Si-C bond, each $R^4$ is an alkoxy group, an acyloxy group, or a halogen group, and a is an integer of 1 to 3, and
in Formula (2) and Formula (3), each of $R^5$ and $R^7$ is a $C_{1-3}$ alkyl group or a $C_{6-30}$ aryl group and is bonded to a silicon atom through a Si-C bond, each of $R^6$ and $R^8$ is an alkoxy group, an acyloxy group, or a halogen group, Y is an alkylene group, an NH group, or an oxygen atom, b is an integer of 1 to 3, c is an integer of 0 or 1, and d is an integer of 1 to 3),
as a tenth aspect, the silica sol according to any one of the first aspect to the eighth aspect,
wherein the silane compound according to the ninth aspect is a silane compound of Formula (1) (wherein, $R^3$ is an organic group having an aryl group and is bonded to a silicon atom through a Si-C bond, each $R^4$ is an alkoxy group, an acyloxy group, or a halogen group, and a is an integer of 1 to 3),
as an eleventh aspect, the silica sol according to any one of the first aspect to the tenth aspect,
wherein the silica particles as the dispersoids contain aluminum atoms in terms of $Al_2O_3$ in a proportion of 800 to 10, 000 ppm/$SiO_2$ in the silica particles,
as a twelfth aspect, a production method of the silica sol according to any one of the first aspect to the eleventh aspect, comprising

the following process (A) to process (D):

a process (A): a process of obtaining a silica sol in which silica particles having an average particle diameter of 5 to 200 nm determined by a dynamic light scattering method (DLS method) are dispersed in alcohol $R^1OH$ (provided that $R^1$ is a $C_{1-10}$ organic group, which arbitrarily has an oxygen atom), wherein the silica sol has a water content of 5% by mass or less,
a process (B): a process of adding a basic substance to the silica sol obtained in the process (A),
a process (C): a process of adding a silane compound having an epoxy group or an epoxy group-containing organic group ($R^2$) to the silica sol obtained in the process (B) to cover the silica particles, and
a process (D): a process of substituting the alcohol $R^1OH$ with an organic substance having a carbonyl structure or

an organic substance having an epoxy group as the dispersion medium in the silica sol obtained in the process (C)

as a thirteenth aspect, the production method according to the twelfth aspect,
wherein, in the process (C), additionally, at least one silane compound selected from the group consisting of Formula (1) to Formula (3) is added to cover the silica particles,
as a fourteenth aspect, the production method according to the twelfth aspect or the thirteenth aspect,
wherein, in the process (D), the alcohol $R^1OH$ is substituted with the organic substance having a carbonyl structure as the dispersion medium, and then additionally substituted with the organic substance having an epoxy group,
as a fifteenth aspect, a cured product-forming composition containing the silica sol according to any one of the first aspect to the eleventh aspect, an amine-based curing agent, an acid anhydride-based curing agent, or an acid generator-based curing agent, and
as a sixteenth aspect, the cured product-forming composition according to the fifteenth aspect, further comprising an epoxy resin.

Effects of the Invention

The present invention provides a silica sol that contains silica particles containing an epoxy group or an epoxy group-containing organic group ($R^2$), and an alkoxy group ($OR^1$), and having an average primary particle diameter of 5 to 100 nm determined by a nitrogen gas adsorption method (BET method) as dispersoids, contains an organic substance as a dispersion medium, and also contains a basic substance. Here, when an average particle diameter of the silica particles determined by a dynamic light scattering method (DLS method) is 5 to 200 nm, a ratio of (average particle diameter determined by the DLS method)/(average primary particle diameter determined by the BET method) is 1.05 to 2.00,

wherein the silica particles contain 0.1 to 6.0 epoxy groups or epoxy group-containing organic groups ($R^2$)/$nm^2$ per unit area of the surface of the silica particles, and
wherein the silica particles contain 0.3 to 4.0 alkoxy groups ($OR^1$)/$nm^2$ per unit area of the surface of the silica particles, and a molar ratio ($R^2$)/($OR^1$) is 0.1 to 2.0.

In the present invention, it has been found that, when the molar ratio ($R^2$)/($OR^1$) is within a specific range, the silica particles are stably present in the organic substance dispersion medium (that is, the organic solvent).
In the present invention, a silane compound having an epoxy group or epoxy group-containing organic group ($R^2$) structure is added to a silica sol using alcohol having an $R^1OH$ structure as a dispersion medium in the presence of a basic substance, and the solvent is then substituted with an organic substance dispersion medium (organic solvent).
The alkoxy group ($OR^1$) is formed when an aqueous silica sol is solvent-substituted with the $R^1OH$ alcohol, and the silanol group of silica particles changes to an alkoxy group ($OR^1$), but in the presence of a basic substance, water may cause a reverse reaction of the reaction and the alkoxy group ($OR^1$) may return to the silanol group. In the present invention, when the silica sol using alcohol having an $R^1OH$ structure as a dispersion medium has a water content of 5% by mass or less, for example, 1.0 to 5.0% by mass, 1.2 to 5.0% by mass, or 1.2 to 3.0% by mass, it contains a silane compound having an epoxy group or epoxy group-containing organic group ($R^2$) structure, and the molar ratio ($R^2$)/($OR^1$) can be set to be within a range of 0.1 to 2.0.
In the present invention, containing an epoxy group or an epoxy group-containing organic group ($R^2$), and an alkoxy group ($OR^1$) means that alcohol having an $R^1$-OH structure forms a covalent bond with a Si-$OR^1$ structure (Si indicates Si in the silica particles) in the silica particles in the silica sol, and some interact as $R^1$-OH derived from $R^1$O-with the silica particles through a hydrogen bond.
Similarly, an epoxy group or an epoxy group-containing organic group ($R^2$) forms a covalent bond with a Si-O-Si-$R^2$ structure (Si on the left indicates Si in the silica particles, and Si on the right indicates Si in the silane compound) via silicon atoms in the silica particles in the silica sol, and some interact as an $R^2$-Si-$(OH)_3$ silane compound derived from $R^2$-Si-$(OR)_3$ (provided that R is a methyl group or an ethyl group and forms a hydrolyzable group of OR) with silica particles through a hydrogen bond.

MODES FOR CARRYING OUT THE INVENTION

The present invention provides a silica sol that contains silica particles containing an epoxy group or an epoxy group-containing organic group ($R^2$), and an alkoxy group ($OR^1$), and having an average primary particle diameter of 5 to 100 nm determined by a nitrogen gas adsorption method (BET method) as dispersoids, contains an organic substance as a dispersion medium, and also contains a basic substance,

wherein when an average particle diameter of the silica particles determined by a dynamic light scattering method (DLS method) is 5 to 200 nm, a ratio of (average particle diameter determined by the DLS method)/(average primary particle diameter determined by the BET method) is 1.05 to 2.00,
wherein the silica particles contain 0.1 to 6.0 epoxy groups or epoxy group-containing organic groups ($R^2$)/$nm^2$ per unit area of a surface of the silica particles, and
wherein the silica particles contain 0.3 to 4.0 alkoxy groups ($OR^1$)/$nm^2$ per unit area of the surface of the silica particles, and a molar ratio ($R^2$)/($OR^1$) is 0.1 to 2.0.

The alkoxy group ($OR^1$) of the present invention is an alkoxy group ($OR^1$) formed on silica particles (on or near the surface) when an aqueous silica sol is solvent-substituted with alcohol having an $R^1$-OH structure, and is a functional group derived from $C_{1-4}$ alcohol, for example, methanol, ethanol, n-propanol, i-propanol, propylene glycol monomethyl ether and the like, and examples thereof include methoxy group, ethoxy group, n-propanol group, i-propanol group, and 1-methoxy-2-propoxy group. Some interact with silica particles in the form of alcohol.

The epoxy group or epoxy group-containing organic group ($R^2$) is a functional group formed on silica particles (on or near the surface) when a silane containing an epoxy group or epoxy group-containing organic group ($R^2$) is added to the silica particles. Examples of epoxy groups include glycidyl group or 3,4-epoxycyclohexyl group, such as 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, and 2-(3,4-epoxycyclohexyl)ethyltriethoxysilane.

The silica particles contain 0.3 to 4.0 alkoxy groups ($OR^1$)/$nm^2$ per unit area of the surface of the silica particles, contain 0.1 to 6.0 epoxy groups or epoxy group-containing organic groups ($R^2$)/$nm^2$ per unit area of the surface of the silica particles, and have a molar ratio ($R^2$)/($OR^1$) of 0.1 to 2.0. The content is measured per unit area of the surface of the silica particles, and is a sum of the case of covalently bonding to the silica particles and the case of hydrogen-bonding thereto, and is obtained by addition of ($R^2$)- and ($OR^1$)-containing compounds.

The sol of the present invention has a solid content of 0.1 to 70% by mass, or 1 to 60% by mass, or 10 to 55% by mass. Here, the solid content is obtained by removing the solvent component from all components of the sol.

The silica particles of the present invention can have an average primary particle diameter range of 5 to 200 nm, 5 to 150 nm, or 5 to 100 nm determined by a nitrogen gas adsorption method (BET method). Here, the silica particles can have an average particle diameter range of 5 to 200 nm or 5 to 150 nm determined by a dynamic light scattering method (DLS method). The silica particles have a ratio of 1.05 to 2.00 (average particle diameter determined by the DLS method)/(average primary particle diameter determined by the BET method). Although the silica particles have the ($R^2$) group, since the molar ratio with the ($OR^1$) group is 0.1 to 2.0, they exist in a nearly spherical form without aggregating even in an organic solvent.

In addition, in the silica sol, an average particle diameter of the silica particles determined by the dynamic light scattering method after storage at 50°C for 7 days is in a range of 1.0 to 1.2 times a value before storage. Since the value after storage is in the range of 1.0 to 1.2 times the value before storage, the silica sol of the present invention has high storage stability and is stable.

The silica sol of the present invention uses an organic substance as a dispersion medium, and the dispersion medium is an organic substance having a carbonyl structure or an organic substance having an epoxy group.

The organic substance having a carbonyl structure includes a ketone solvent, an amide solvent, and an ester solvent.

The ketone solvent is a linear or cyclic aliphatic ketone having a carbon atom number of 3 to 30, and examples thereof include methyl ethyl ketone, diethylketone, methylpropylketone, methyl isobutyl ketone, diisopropyl ketone, diisobutyl ketone, methyl amyl ketone, and cyclohexanone. The amide solvent is an aliphatic amide having a carbon atom number of 4 to 30, and examples thereof include dimethylacetamide, dimethylformamide, N-methylpyrrolidone, and N-ethylpyrrolidone. Examples of ester solvents include ethyl acetate, n-propyl acetate, isopropyl acetate, butyl acetate, and propylene glycol monomethyl ether acetate.

Preferable examples of the organic substance having a carbonyl structure include methyl isobutyl ketone, diisopropyl ketone, diisobutyl ketone, ethyl acetate, butyl acetate, or propylene glycol monomethyl ether acetate.

The organic substance having an epoxy group is a liquid epoxy compound, and examples thereof include 1,4-butanediol diglycidyl ether, 1,2-epoxy-4-(epoxyethyl)cyclohexane, glycerol triglycidyl ether, diethylene glycol diglycidyl ether, 2,6-diglycidyl phenyl glycidyl ether, 1,1,3-tris[p-(2,3-epoxypropoxy)phenyl]propane, 1,2-cyclohexanedicarboxylic acid diglycidyl ester, 4,4'-methylenebis(N,N-diglycidylaniline), 3,4-epoxycyclohexyl methyl-3,4-epoxycyclohexanecarboxylate, trimethylolethane triglycidyl ether, triglycidyl-p-aminophenol, tetraglycidyl m-xylene diamine, tetraglycidyl diamino diphenyl methane, tetraglycidyl-1,3-bisaminomethylcyclohexane, bisphenol-A-diglycidyl ether, bisphenol-F-diglycidyl ether, bisphenol-S-diglycidyl ether, pentaerythritol tetraglycidyl ether, resorcinol diglycidyl ether, phthalate diglycidyl ester, neopentyl glycol diglycidyl ether, polypropylene glycol diglycidyl ether, tetrabromobisphenol-A-diglycidyl ether, bisphenol hexafluoroacetone diglycidyl ether, pentaerythritol diglycidyl ether, hydrogenated bisphenol-A-diglycidyl

ether, tris-(2,3-epoxypropyl)isocyanurate, 1-{2,3-di(propionyloxy)}-3,5-bis(2,3-epoxypropyl)-1,3,5-triazine-2,4,6·(1H,3H,5H)- trione, 1,3-bis{2,3-di(propionyloxy)}-5-(2,3-epoxypropyl)-1,3,5-triazine-2,4,6·(1H,3H,5H)- trione, monoallyl diglycidyl isocyanurate, diglycerol polydiglycidyl ether, pentaerythritol polyglycidyl ether, 1,4-bis(2,3-epoxypropoxyperfluoroisopropyl)cyclohexane, sorbitol polyglycidyl ether, trimethylolpropane polyglycidyl ether, resorcinol diglycidyl ether, 1,6-hexanediol diglycidyl ether, polyethylene glycol diglycidyl ether, phenyl glycidyl ether, p-tert-butyl phenyl glycidyl ether, adipic acid diglycidyl ether, o-phthalic acid diglycidyl ether, dibromophenyl glycidyl ether, 1,2,7,8-diepoxyoctane, 1,6-dimethylolperfluorohexane diglycidyl ether, 4,4'-bis(2,3-epoxypropoxyperfluoroisopropyl)diphenyl ether, 2,2-bis(4-glycidyloxyphenyl)propane, 3,4-epoxycyclohexyl methyl-3',4'-epoxycyclohexanecarboxylate, 3,4-epoxycyclohexyloxysilane, 2-(3,4-epoxycyclohexyl)-3',4'-epoxy-1,3-dioxane-5-spirocyclohexane, 1,2-ethylenedioxy-bis(3,4-epoxycyclohexylmethane), 4',5'-epoxy-2'-methyl cyclohexyl methyl-4,5-epoxy-2-methyl cyclohexanecarboxylate, ethylene glycol-bis(3,4-epoxycyclohexanecarboxylate), bis-(3,4-epoxycyclohexyl methyl)adipate, and bis(2,3-epoxycyclopentyl)ether.

Particularly, a bisphenol A liquid epoxy compound, a bisphenol F liquid epoxy compound, or 3',4'-epoxycyclohexylmethyl 3',4'-epoxycyclohexanecarboxylate is exemplified. Examples of bisphenol A liquid epoxy compounds include bisphenol-A-diglycidyl ether, and examples of bisphenol F liquid epoxy compounds include bisphenol-F-diglycidyl ether.

In the present invention, it is preferable to use a silica sol in which dispersoid silica particles contain aluminum atoms in terms of $Al_2O_3$ in a proportion of 800 to 10, 000 ppm/$SiO_2$. When this silica sol is used, the stability is improved.

The silica sol of the present invention can be produced by a method including the following process (A) to process (D):

- a process (A): a process of obtaining a silica sol in which silica particles having an silica particle average particle diameter of 5 to 200 nm determined by a dynamic light scattering method (DLS method) are dispersed in alcohol $R^1OH$ (provided that $R^1$ is a $C_{1-10}$ organic group, which arbitrarily has an oxygen atom), wherein the silica sol has a water content of 5% by mass or less,
- a process (B): a process of adding a secondary amine or tertiary amine having a total number of carbon atoms of 5 to 35 to the silica sol obtained in the process (A),
- a process (C): a process of adding a silane compound having an epoxy group or an epoxy group-containing organic group ($R^2$) to the silica sol obtained in the process (B) to cover the silica particles, and
- a process (D): a process of substituting the alcohol $R^1OH$ with an organic substance having a carbonyl structure or an organic substance having an epoxy group as the dispersion medium.

In the process (A), a silica sol using $C_{1-10}$ alcohol, preferably $C_{1-4}$ alcohol, as a dispersion medium can be used. Examples of alcohol include methanol, ethanol, n-propanol, i-propanol, and propylene glycol monomethyl ether. Particularly, the alcohol is preferably methanol. A silica sol using alcohol having an $R^1OH$ structure as a dispersion medium preferably has a water content of 5% by mass or less, for example, 1.0 to 5.0% by mass, 1.2 to 5.0% by mass, or 1.2 to 3.0% by mass.

A silica sol using $C_{1-10}$ alcohol $R^1OH$, preferably $C_{1-4}$ alcohol $R^1OH$, as a dispersion medium can be obtained using an aqueous silica sol as a starting raw material. The aqueous silica sol is obtained using water glass as a starting raw material through a) a process of cation-exchanging water glass to obtain an activated silicic acid, and b) a process of heating the activated silicic acid to obtain silica particles. In the a) process, an activated silicic acid in which, in order to increase the purity of the activated silicic acid, a mineral acid (for example, hydrochloric acid, nitric acid, or sulfuric acid) is added, metal impurities other than silica are eluted, and metal impurities and unnecessary anions are removed by cation exchange and anion exchange can be used. In the b) process, an alkali component (for example, NaOH, KOH) is added to the activated silicic acid to grow silica particles. In order to promote growth of silica particles, a seed liquid in which an alkali is added to the activated silicic acid obtained in the a) process and a feed liquid are prepared, and while heating the seed liquid, the feed liquid is supplied to increase the size of the silica particles, and thus an aqueous silica sol having an arbitrary particle diameter can be obtained.

More preferably, within the aqueous silica sol obtained in the b) process, an acidic silica sol from which alkali ions existing outside the particles have been removed is suitable as a starting raw material of the present invention.

In the process (A) of the present invention, it is possible to obtain a silica sol in which an aqueous medium of an aqueous silica sol is preferably solvent-substituted with the $C_{1-4}$ alcohol $R^1OH$ (provided that $R^1$ is a $C_{1-4}$ alkyl group, and the alcohol is particularly methanol), silica particles having an average particle diameter of 5 to 200 nm determined by the dynamic light scattering method are used as dispersoids, and the $C_{1-4}$ alcohol is used as a dispersion medium.

The process (B) is a process of adding a basic substance to the silica sol obtained in the process (A).

The amount of the basic substance added is preferably such that the pH of the silica sol is 6.0 to 11.0, or 7.0 to 11.0. The amount of the basic substance added is present as the content in the silica sol. The pH of the silica sol of the present invention is obtained by measuring a liquid obtained by mixing silica sol, methanol and pure water at a mass

ratio of 1:1:1 or 1:2:1 with a pH meter.

Examples of basic substances include amines, ammonia, inorganic alkaline compounds, and quaternary ammonium compounds.

Examples of amines include secondary amines and tertiary amines having a total number of carbon atoms of 5 to 35.

Examples of secondary amines include ethyl-n-propylamine, ethylisopropylamine, dipropylamine, diisopropylamine, ethylbutylamine, n-propylbutylamine, dibutylamine, ethylpentylamine, n-propylpentylamine, isopropylpentylamine, dipentylamine, ethyloctyl amine, i-propyloctyl amine, butyloctylamine, and dioctylamine.

Examples of tertiary amines include triethylamine, ethyl-di-n-propylamine, diethyl-n-propylamine, tri-n-propylamine, triisopropylamine, ethyldibutylamine, diethylbutylamine, isopropyldibutylamine, diisopropylethylamine, diisopropylbutylamine, tributylamine, ethyldipentylamine, diethylpentylamine, tri-n-pentylamine, methyldioctylamine, dimethyloctyl amine, ethyldioctylamine, diethyloctyl amine, trioctyl amine, benzyldibutylamine, and diazabicycloundesene.

Among the above amines, secondary amines and tertiary amines having an alkyl group having a total number of carbon atoms of 5 to 35 are preferable, and examples thereof include diisopropylamine, tri-n-pentylamine, triisopropylamine, dimethyloctyl amine, trioctyl amine, and diisopropylethylamine.

Ammonia can be used as gaseous ammonia or aqueous ammonia.

The quaternary ammonium hydroxide is preferably a tetraalkylammonium hydroxide having a total number of carbon atoms of 4 to 40, and examples thereof include tetramethylammonium hydroxide, tetraethylammonium hydroxide, tetra-n-propylammonium hydroxide, tetra-i-propylammonium hydroxide, tetrabutylammonium hydroxide, and ethyltrimethylammonium hydroxide.

Examples of inorganic alkaline compounds include alkali metal hydroxides, such as sodium hydroxide, potassium hydroxide, sodium carbonate, and potassium carbonate.

The process (C) is a process of adding a silane compound having an epoxy group or an epoxy group-containing organic group ($R^2$) to the silica sol obtained in the process (B) to cover silica particles.

The epoxy group or epoxy group-containing organic group ($R^2$) is a functional group formed on silica particles (on or near the surface) when a silane containing an epoxy group or epoxy group-containing organic group ($R^2$) is added to the the silica particles.

The epoxy group is a glycidyl group or 3,4-epoxycyclohexyl group, examples thereof include 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, and 2-(3,4-epoxycyclohexyl)ethyltriethoxysilane. Particularly, 2-(3,4-epoxycyclohexyl)ethyltrimethoxysilane, 2-(3,4-epoxycyclohexyl)ethyltriethoxysilane, 3-glycidoxypropylmethyldimethoxysilane, 3-glycidoxypropylmethyldiethoxysilane, or 3-glycidoxypropyltrimethoxysilane can be preferably used.

This is a process in which the silane compound reacts with a hydroxy group on or near the surface of silica particles, for example, a silanol group in the case of silica particles, to cover the surface of the silica particles with the silane compound through a siloxane bond. The reaction temperature can be from 20°C to a boiling point of the dispersion medium, and for example, the reaction can be performed in a range of 20°C to 100°C. The reaction can be performed for a reaction time of about 0.1 to 6 hours.

Water is required for hydrolysis of the silane compound, in the case of a sol of a $C_{1-4}$ alcohol $R^1OH$ solvent, water remaining in the alcohol solvent when the aqueous medium is solvent-substituted with alcohol can be used. The residual water is water that remains when an aqueous medium sol is solvent-substituted with a sol of an $C_{1-4}$ alcohol solvent, and for example, the water content of the silica sol dispersed in the alcohol can be 5% by mass or less, for example, 1.0 to 5.0% by mass, 1.2 to 5.0% by mass, or 1.2 to 3.0% by mass.

As a catalyst, the basic substance also serves as a hydrolysis catalyst.

In the process (C), in addition to adding the silane containing an epoxy group or an epoxy group-containing organic group ($R^2$), at least one silane compound selected from the group consisting of Formula (1) to Formula (3) can be added.

In Formula (1), each $R^3$ is an alkyl group, a halogenated alkyl group, an alkenyl group, an aryl group, or an organic group having a (meth)acryloyl group, a mercapto group, an amino group, a ureido group, or a cyano group, and is bonded to a silicon atom through a Si-C bond, each $R^4$ is an alkoxy group, an acyloxy group, or a halogen group, and a is an integer of 1 to 3,

In Formula (2) and Formula (3), each of $R^5$ and $R^7$ is a $C_{1-3}$ alkyl group or a $C_{6-30}$ aryl group and is bonded to a silicon atom through a Si-C bond, each of $R^6$ and $R^8$ is an alkoxy group, an acyloxy group, or a halogen group, Y is an alkylene group, an NH group, or an oxygen atom, b is an integer of 1 to 3, c is an integer of 0 or 1, and d is an integer of 1 to 3.

The alkyl group is a $C_{1-18}$ alkyl group, and examples thereof include methyl group, ethyl group, n-propyl group, i-propyl group, cyclopropyl group, n-butyl group, i-butyl group, s-butyl group, t-butyl group, cyclobutyl group, 1-methyl-cyclopropyl group, 2-methyl-cyclopropyl group, n-pentyl group, 1-methyl-n-butyl group, 2-methyl-n-butyl group, 3-methyl-n-butyl group, 1,1-dimethyl-n-propyl group, 1,2-dimethyl-n-propyl group, 2,2-dimethyl-n-propyl group, 1-ethyl-n-propyl group, cyclopentyl group, 1-methyl-cyclobutyl group, 2-methyl-cyclobutyl group, 3-methyl-cyclobutyl group, 1,2-dimethyl-cyclopropyl group, 2,3-dimethyl-cyclopropyl group, 1-ethyl-cyclopropyl group, 2-ethyl-cyclopropyl group, n-hexyl group, 1-methyl-n-pentyl group, 2-methyl-n-pentyl group, 3-methyl-n-pentyl group, 4-methyl-n-pentyl group, 1,1-dimethyl-n-butyl group, 1,2-dimethyl-n-butyl group, 1,3-dimethyl-n-butyl group, 2,2-dimethyl-n-butyl group, 2,3-dimethyl-n-butyl group, 3,3-dimethyl-n-butyl group, 1-ethyl-n-butyl group, 2-ethyl-n-butyl group, 1,1,2-trimethyl-n-propyl group, 1,2,2-trimethyl-n-propyl group, 1-ethyl-1-methyl-n-propyl group, 1-ethyl-2-methyl-n-propyl group, cyclohexyl group, 1-methyl-cyclopentyl group, 2-methyl-cyclopentyl group, 3-methyl-cyclopentyl group, 1-ethyl-cyclobutyl group, 2-ethyl-cyclobutyl group, 3-ethyl-cyclobutyl group, 1,2-dimethyl-cyclobutyl group, 1,3-dimethyl-cyclobutyl group, 2,2-dimethyl-cyclobutyl group, 2,3-dimethyl-cyclobutyl group, 2,4-dimethyl-cyclobutyl group, 3,3-dimethyl-cyclobutyl group, 1-n-propyl-cyclopropyl group, 2-n-propyl-cyclopropyl group, 1-i-propyl-cyclopropyl group, 2-i-propyl-cyclopropyl group, 1,2,2-trimethyl-cyclopropyl group, 1,2,3-trimethyl-cyclopropyl group, 2,2,3-trimethyl-cyclopropyl group, 1-ethyl-2-methyl-cyclopropyl group, 2-ethyl-1-methyl-cyclopropyl group, 2-ethyl-2-methyl-cyclopropyl group and 2-ethyl-3-methyl-cyclopropyl group, hexyl group, heptyl group, octyl group, nonyl group, decyl group, undecyl group, dodecyl group, tridecyl group, tetradecyl group, pentadecyl group, hexadecyl group, heptadecyl group, and octadecyl group, but the present invention is not limited thereto.

In addition, the alkylene group may be an alkylene group derived from the above alkyl group.

The aryl group is a $C_{6-30}$ aryl group, and examples thereof include phenyl group, naphthyl group, anthracene group, and pyrene group.

The alkenyl group is a $C_{2-10}$ alkenyl group, and examples thereof include ethenyl group, 1-propenyl group, 2-propenyl group, 1-methyl-1-ethenyl group, 1-butenyl group, 2-butenyl group, 3-butenyl group, 2-methyl-1-propenyl group, 2-methyl-2-propenyl group, 1-ethylethenyl group, 1-methyl-1-propenyl group, 1-methyl-2-propenyl group, 1-pentenyl group, 2-pentenyl group, 3-pentenyl group, 4-pentenyl group, 1-n-propylethenyl group, 1-methyl-1-butenyl group, 1-methyl-2-butenyl group, 1-methyl-3-butenyl group, 2-ethyl-2-propenyl group, 2-methyl-1-butenyl group, 2-methyl-2-butenyl group, 2-methyl-3-butenyl group, 3-methyl-1-butenyl group, 3-methyl-2-butenyl group, 3-methyl-3-butenyl group, 1,1-dimethyl-2-propenyl group, 1-i-propylethenyl group, 1,2-dimethyl-1-propenyl group, 1,2-dimethyl-2-propenyl group, 1-cyclopentenyl group, 2-cyclopentenyl group, 3-cyclopentenyl group, 1-hexenyl group, 2-hexenyl group, 3-hexenyl group, 4-hexenyl group, 5-hexenyl group, 1-methyl-1-pentenyl group, 1-methyl-2-pentenyl group, 1-methyl-3-pentenyl group, 1-methyl-4-pentenyl group, 1-n-butylethenyl group, 2-methyl-1-pentenyl group, and 2-methyl-2-pentenyl group, but the present invention is not limited thereto.

Examples of alkoxy groups include a $C_{1-10}$ alkoxy group, such as methoxy group, ethoxy group, n-propoxy group, i-propoxy group, n-butoxy group, i-butoxy group, s-butoxy group, t-butoxy group, n-pentyloxy group, 1-methyl-n-butoxy group, 2-methyl-n-butoxy group, 3-methyl-n-butoxy group, 1,1-dimethyl-n-propoxy group, 1,2-dimethyl-n-propoxy group, 2,2-dimethyl-n-propoxy group, 1-ethyl-n-propoxy group, and n-hexyloxy group, but the present invention is not limited thereto.

The acyloxy group is a $C_{2-10}$ acyloxy group, and examples thereof include methylcarbonyloxy group, ethylcarbonyloxy group, n-propylcarbonyloxy group, i-propylcarbonyloxy group, n-butyl carbonyloxygroup, i-butyl carbonyloxygroup, s-butyl carbonyloxy group, t-butyl carbonyloxygroup, n-pentylcarbonyloxy group, 1-methyl-n-butyl carbonyloxygroup, 2-methyl-n-butyl carbonyloxygroup, 3-methyl-n-butyl carbonyloxygroup, 1,1-dimethyl-n-propylcarbonyloxy group, 1,2-dimethyl-n-propylcarbonyloxy group, 2,2-dimethyl-n-propylcarbonyloxy group, 1-ethyl-n-propylcarbonyloxy group, n-hexyl carbonyloxy group, 1-methyl-n-pentylcarbonyloxy group, and 2-methyl-n-pentylcarbonyloxy group, but the present invention is not limited thereto.

Examples of halogen groups include fluorine, chlorine, bromine, and iodine.

The (meth)acryloyl group represents both an acryloyl group and a methacryloyl group. Examples of organic groups having a (meth)acryloyl group include 3-methacryloxypropyl group and 3-acryloxypropyl group.

Examples of organic groups having a mercapto group include 3-mercaptopropyl group.

Examples of organic groups having an amino group include 2-aminoethyl group, 3-aminopropyl group, N-2-(aminoethyl)-3-aminopropyl group, N-(1,3-dimethylbutylidene)aminopropyl group, N-phenyl-3-aminopropyl group, and N-(vinylbenzyl)-2-aminoethyl-3-aminopropyl group.

Examples of organic groups having an ureido group include 3-ureidopropyl group.

Examples of organic groups having a cyano group include 3-cyanopropyl group.

The silica compounds of Formula (2) and Formula (3) are preferably compounds that can form a trimethylsilyl group on the surface of silica particles.

Examples of these compounds are listed below.

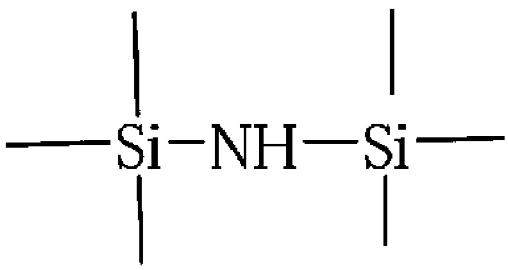

Formula (2-1)

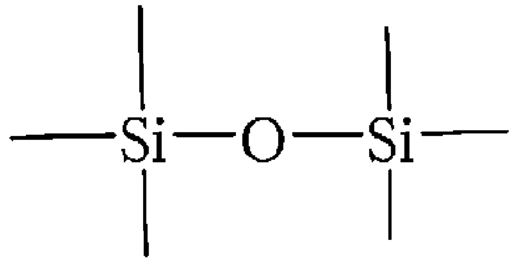

Formula (2-2)

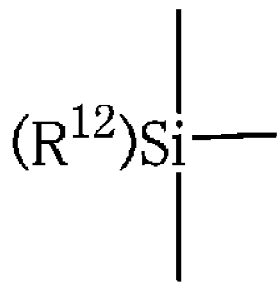

Formula (2-3)

In the above formula, $R^{12}$ is an alkoxy group, and examples thereof include methoxy group and ethoxy group.

Examples of preferable functional groups include trimethylsilyl group, monomethylsilyl group, dimethylsilyl group, methacryloxypropylsilyl group, and phenyl group, and examples of corresponding silane compounds include hexamethyldisilazane, hexamethylsiloxane, hexamethyldisiloxane, methyltrimethoxysilane, dimethyldimethoxysilane, methyltriethoxysilane, methacryloxypropyltrimethoxysilane, methacryloxypropyltriethoxysilane, acryloxypropyltrimethoxysilane, acryloxypropyltriethoxysilane, phenyltrimethoxysilane, and phenyltriethoxysilane.

The silane compound is preferably a silane compound of Formula (1) ($R^3$ is an organic group having an aryl group and is bonded to a silicon atom through a Si-C bond, $R^4$'s each are an alkoxy group, an acyloxy group, or a halogen group, and a is an integer of 1 to 3), and examples thereof include phenyltriethoxysilane and phenyltrimethoxysilane.

The process (D) is a process of substituting the alcohol $R^1OH$ with an organic substance having a carbonyl structure or an organic substance having an epoxy group as the dispersion medium in the silica sol obtained in the process (C).

The organic substance having a carbonyl structure is a ketone solvent, an amide solvent, or an ester solvent, and the organic substance having an epoxy group is a liquid epoxy compound, such as one of the compounds listed above.

In the process (D), after the alcohol $R^1OH$ is substituted with an organic substance having a carbonyl structure as the dispersion medium, it can be additionally substituted with an organic substance having an epoxy group.

In the present invention, a silica sol using an organic substance having a carbonyl structure as a dispersion medium and a silica sol using an organic substance having an epoxy group as a dispersion medium are obtained. Both of the silica sols can be made into a cured product by incorporating a curing agent such as an amine-based curing agent, an acid anhydride-based curing agent, or an acid generator-based curing agent (a thermal acid generator or a photoacid generator). A cured product can be formed by applying a cured product-forming composition containing a silica sol and a curing agent to a substrate, and performing heating, light emission, or a combination thereof. The cured product-forming composition may further contain an epoxy resin.

A thermosetting cured product-forming composition may contain a proportion of 0.5 to 1.5 equivalents, preferably 0.8 to 1.2 equivalents of a thermosetting agent with respect to the epoxy group. The equivalent of the thermosetting agent with respect to the epoxy compound is indicated by the equivalence ratio of the curable group of the thermosetting agent with respect to the epoxy group.

Examples of thermosetting agents include phenolic resins, amine-based curing agents, polyamide resins, imidazoles, polymercaptans, acid anhydrides, and thermal acid generators. Particularly, acid anhydride-based curing

agents and amine-based curing agents are preferable.

Even if these thermosetting agents are a solid, they can be used by being dissolved in a solvent, but evaporation of the solvent causes a decrease in the density of the cured product, formation of pores, resulting in a decrease in strength, and a decrease in water resistance, and thus it is preferable that the curing agent itself be a liquid at room temperature under a normal pressure.

Examples of phenolic resins include phenol novolac resins and cresol novolac resins.

Examples of amine-based curing agents include piperidine, N,N-dimethylpiperazine, triethylenediamine, 2,4,6-tris(dimethylaminomethyl)phenol, benzyldimethylamine, 2-(dimethylaminomethyl)phenol, diethylenetriamine, triethylenetetramine, tetraethylenepentamine, diethylaminopropylamine, N-aminoethylpiperazine, di(1-methyl-2-aminocyclohexyl)methane, methylenediamine, isophorone diamine, diaminodicyclohexylmethane, 1,3-diaminomethylcyclohexane, xylene diamine, m-phenylene diamine, diamino diphenyl methane, diamino diphenyl sulfone, 3,3'-diethyl-4,4'-diaminodiphenylmethane, and diethyltoluenediamine. Among these, liquid diethylenetriamine, triethylenetetramine, tetraethylenepentamine, diethylaminopropylamine, N-aminoethylpiperazine, di(1-methyl-2-aminocyclohexyl)methane, methylenediamine, isophorone diamine, diaminodicyclohexylmethane, 3,3'-diethyl-4,4'-diaminodiphenylmethane, diethyltoluenediamine and the like can be preferably used.

The polyamide resin is produced by condensation of dimer acids and polyamines, and is a polyamide amine having a primary amine and a secondary amine in the molecule.

Examples of imidazoles include 2-methylimidazole, 2-ethyl-4-methylimidazole, 1-cyanoethyl-2-undecylimidazolium trimellitate, and epoxyimidazole adducts.

The polymercaptan is, for example, one in which a mercaptan group is present at the end of a polypropylene glycol chain or one in which a mercaptan group is present at the end of a polyethylene glycol chain, and is preferably a liquid.

As the acid anhydride-based curing agent, anhydrides of compounds having a plurality of carboxyl groups in one molecule are preferable. Examples of these acid anhydride-based curing agents include phthalic anhydride, trimellitic anhydride, pyromellitic anhydride, benzophenonetetracarboxylic anhydride, ethylene glycol bistrimellitate, glycerol tristrimellitate, maleic anhydride, tetrahydrophthalic anhydride, methyltetrahydrophthalic anhydride, endo methylene tetrahydrophthalic anhydride, methylendo methylene tetrahydrophthalic anhydride, methylbutenyltetrahydrophthalic anhydride, dodecenyl succinic anhydride, hexahydrophthalic anhydride, methyl hexahydrophthalic anhydride, succinic anhydride, methylcyclohexenedicarboxylic anhydride, and chlorendic anhydride.

Examples of thermal acid generators include sulfonium salts and phosphonium salts, and sulfonium salts are preferably used. For example, the following compounds may be exemplified.

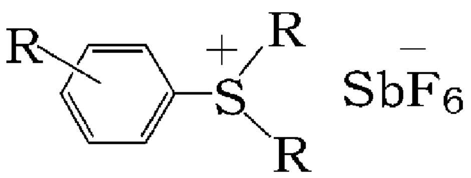

Formula (C-1)

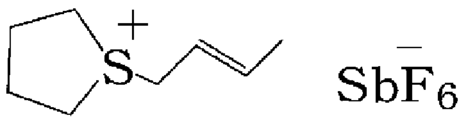

Formula (C-2)

Examples of R include a $C_{1-12}$ alkyl group, a $C_{6-20}$ aryl group, and particularly a $C_{1-12}$ alkyl group is preferable.

Among these, methyltetrahydrophthalic anhydride, methyl-5-norbornene-2,3-dicarboxylic anhydride (methylnadic anhydride, methylhimic anhydride), hydrogenated methylnadic anhydride, methylbutenyltetrahydrophthalic anhydride, dodecenyl succinic anhydride, methyl hexahydrophthalic anhydride, and a mixture of methyl hexahydrophthalic anhydride and hexahydrophthalic anhydride, which are a liquid at room temperature under a normal pressure, are preferable. These liquid acid anhydrides have a viscosity of about 10 mPas to 1,000 mPas measured at 25°C.

In addition, when the cured product is obtained, appropriately, a curing aid may be used in combination. Examples of curing aids include organic phosphorus compounds such as triphenylphosphine and tributylphosphine, quaternary phosphonium salts such as ethyltriphenyl phosphonium bromide, and methyltriphenylphosphonium diethyl phosphate, 1,8-diazabicyclo(5,4,0)undecane-7-ene, salts of 1,8-diazabicyclo(5,4,0)undecane-7-ene and octylic acid, and quaternary ammonium salts such as zinc octylate and tetrabutylammonium bromide. These curing aids can be contained in a proportion of 0.001 to 0.1 parts by mass with respect to 1 part by mass of the curing agent.

A composition containing a silica sol of silica particles containing an epoxy group or an epoxy group-containing organic group ($R^2$), and an alkoxy group ($OR^1$), and further containing an epoxy resin can be mixed with a curing agent and if desired, a curing aid to obtain a thermosetting composition (thermosetting cured product-forming composition). This mixing can be performed in a reaction container using a stirring blade or a kneader.

Mixing is performed by a heating mixing method at a temperature of 60°C to 100°C for 0.5 to 1 hour.

The obtained liquid epoxy resin composition (thermosetting composition) is a thermosetting composition, and has, for example, an appropriate viscosity for use as a liquid encapsulant. The liquid thermosetting composition can be prepared to have any viscosity, and can be partially sealed at any part for use as a transparent encapsulant for LEDs and the like by a casting method, a potting method, a dispenser method, a printing method or the like. A cured epoxy resin product is obtained by directly mounting a liquid thermosetting composition that is a liquid on an LED or the like by the above method and then drying and curing it.

A cured product is obtained by applying the thermosetting composition to a substrate and heating it at a temperature of 80 to 200°C.

The photocurable composition (photocurable cured product-forming composition) can contain a proportion of 0.5 to 20% by mass, preferably 0.8 to 10% by mass of a light curing agent (photoacid generator) with respect to the epoxy group.

The photoacid generator is not particularly limited as long as an acid is directly or indirectly generated by light emission.

As specific examples of photoacid generators, triazine compounds, acetophenone derivative compounds, disulfone compounds, diazomethane compounds, sulfonic acid derivative compounds, onium salts such as iodonium salts, sulfonium salts, phosphonium salts, and selenium salts, metallocene complexes, iron arene complexes and the like can be used.

Regarding the onium salts used as the photoacid generator, examples of iodonium salts include bis(alkylphenyl)iodonium salts such as diphenyliodonium chloride, diphenyliodonium trifluoromethanesulfonate, diphenyliodonium mesylate, diphenyliodonium tosylate, diphenyl iodonium bromide, diphenyl iodonium tetrafluoroborate, diphenyl iodonium hexafluoroantimonate, diphenyl iodonium hexafluoroarsenate, bis(p-tert-butylphenyl)iodonium hexafluorophosphate, bis(p-tert-butylphenyl)iodonium mesylate, bis(p-tert-butylphenyl)iodonium tosylate, bis(p-tert-butyl phenyl)iodonium trifluoromethanesulfonate, bis(p-tert-butylphenyl)iodonium tetrafluoroborate, bis(p-tert-butylphenyl)iodonium chloride, bis(p-chlorophenyl)iodonium chloride, bis(p-chlorophenyl)iodonium tetrafluoroborate, and bis(4-t-butyl phenyl)iodonium hexafluorophosphate, alkoxycarbonylalkoxy-trialkylaryl iodonium salts (for example, 4-[(1-ethoxycarbonyl-ethoxy)phenyl]-(2,4,6-trimethylphenyl)-iodonium hexafluorophosphate, etc.), and bis(alkoxyaryl)iodonium salts (for example, bis(alkoxyphenyl)iodonium salts such as (4-methoxyphenyl)phenyl iodonium hexafluoroantimonate).

Examples of sulfonium salts include triphenylsulfonium salts such as triphenylsulfonium chloride, triphenyl sulfonium bromide, tri(p-methoxyphenyl)sulfonium tetrafluoroborate, tri(p-methoxyphenyl)sulfonium hexafluorophosphonate, tri(p-ethoxyphenyl)sulfonium tetrafluoroborate, triphenyl sulfonium triflate, triphenylsulfonium hexafluoroantimonate, and triphenylsulfonium hexafluorophosphate, and sulfonium salts such as (4-phenylthiophenyl)diphenylsulfonium hexafluoroantimonate, (4-phenylthiophenyl)diphenylsulfonium hexafluorophosphate, bis[4-(diphenylsulfonio)phenyl]sulfide-bis-hexafluoroantimonate, bis[4-(diphenylsulfonio)phenyl]sulfide-bis-hexafluorophosphate, and (4-methoxyphenyl)diphenylsulfonium hexafluoroantimonate).

Regarding the phosphonium salts, phosphonium salts such as triphenylphosphonium chloride, triphenylphosphonium bromide, tri(p-methoxyphenyl)phosphonium tetrafluoroborate, tri(p-methoxyphenyl)phosphonium hexafluorophosphonate, tri(p-ethoxyphenyl)phosphonium tetrafluoroborate, 4-chlorobenzenediazonium hexafluorophosphate, and benzyltriphenylphosphonium hexafluoroantimonate are exemplified.

Selenium salts such as triphenylselenium hexafluorophosphate and metallocene complexes such as (η5 or η6-isopropylbenzene) (η5-cyclopentadienyl) iron(II) hexafluorophosphate are exemplified.

In addition, as the photoacid generator, the following compounds can also be used.

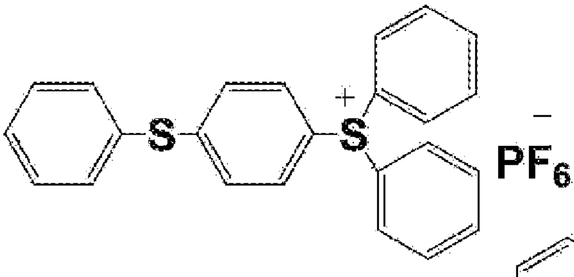
Formula (A-1)

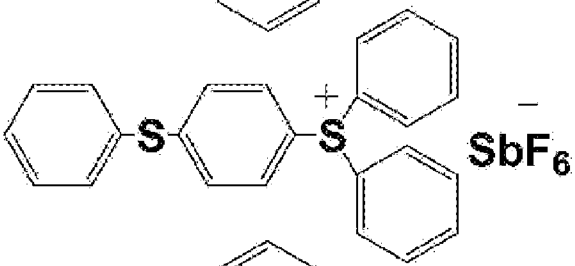
Formula (A-2)

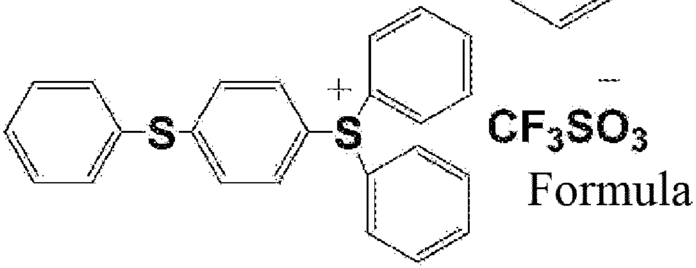
Formula (A-3)

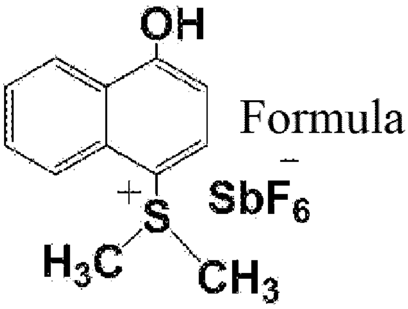
Formula (A-4)

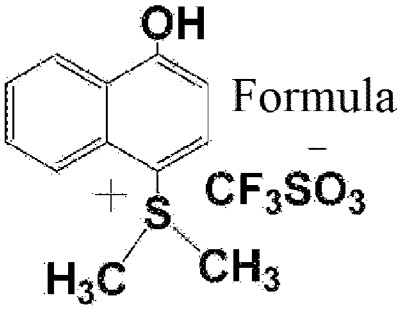
Formula (A-5)

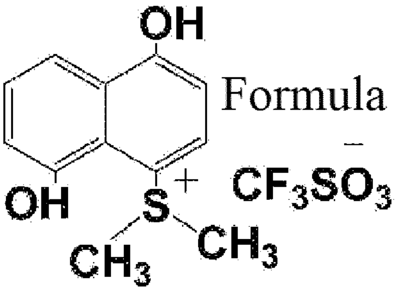
Formula (A-6)

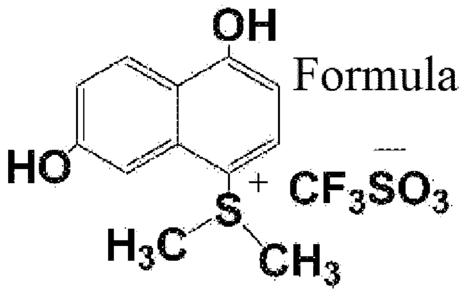
Formula (A-7)

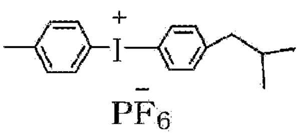
Formula (A-8)

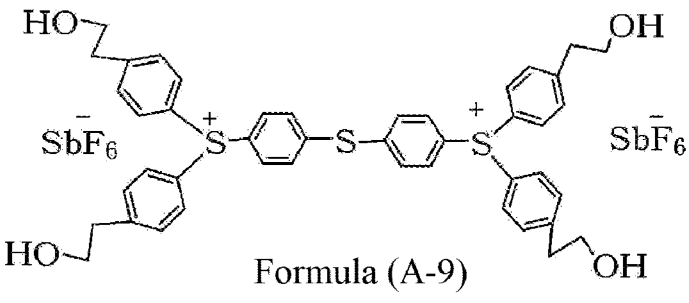
Formula (A-9)

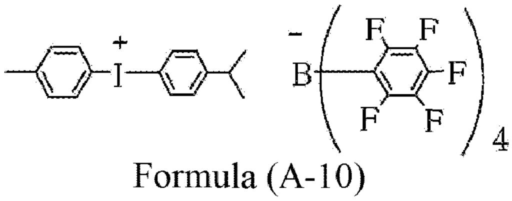

Formula (A-10)

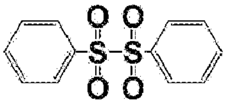

Formula (B-1)

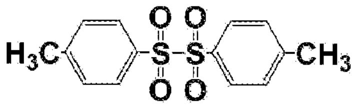

Formula (B-2)

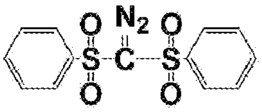

Formula (B-3)

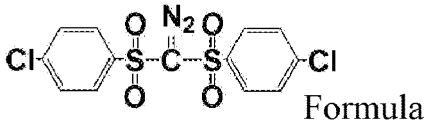

Formula (B-4)

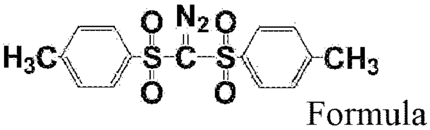

Formula (B-5)

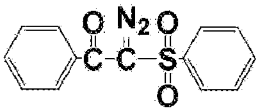

Formula (B-6)

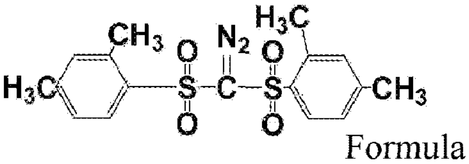

Formula (B-7)

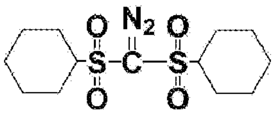

Formula (B-8)

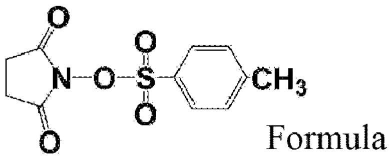

Formula (B-9)

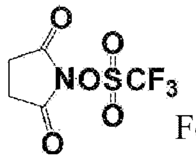

Formula (B-10)

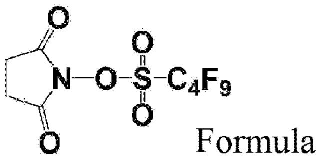

Formula (B-11)

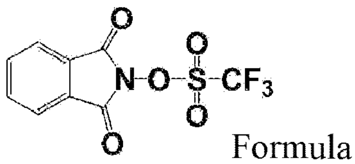

Formula (B-12)

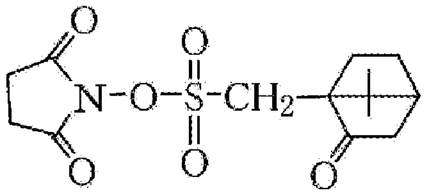

Formula (B-13)

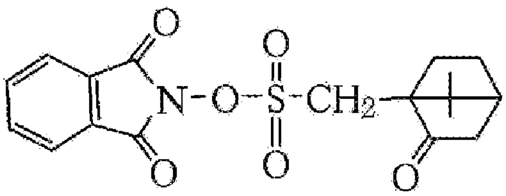

Formula (B-14)

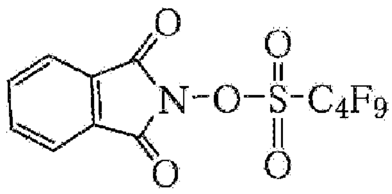

Formula (B-15)

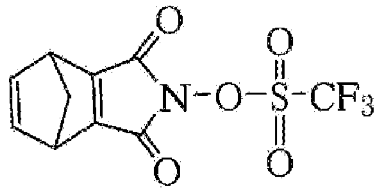

Formula (B-16)

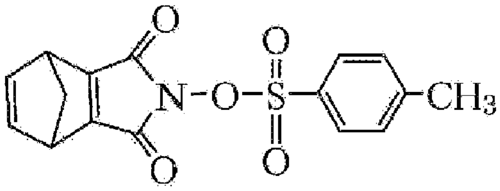

Formula (B-17)

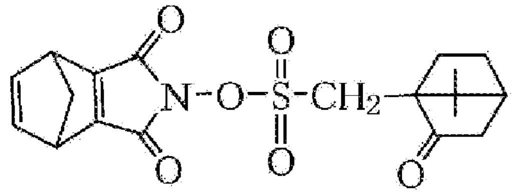

Formula (B-18)

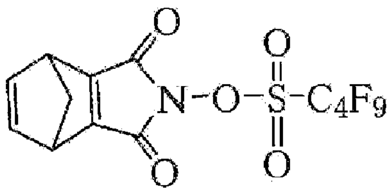

Formula (B-19)

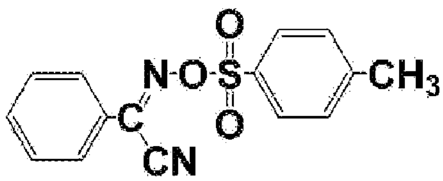

Formula (B-20)

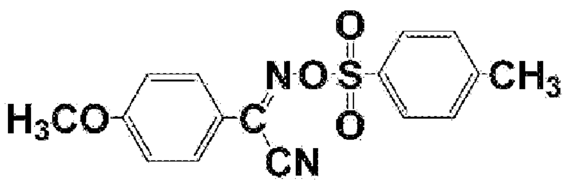

Formula (B-21)

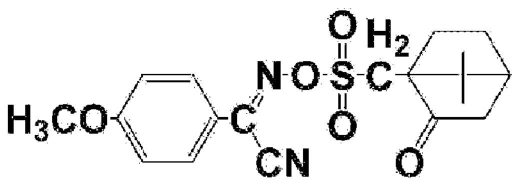

Formula (B-22)

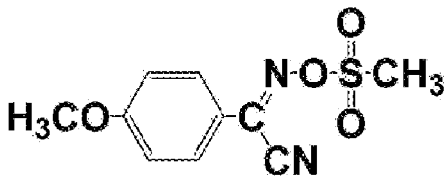

Formula (B-23)

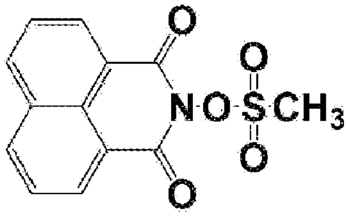

Formula (B-24)

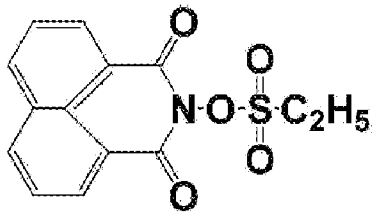

Formula (B-25)

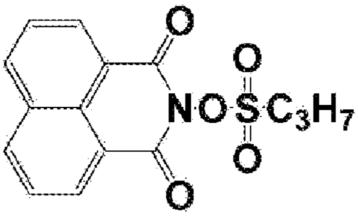

Formula (B-26)

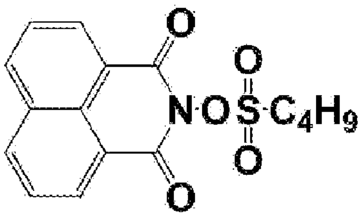

Formula (B-27)

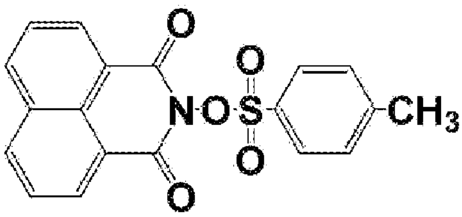

Formula (B-28)

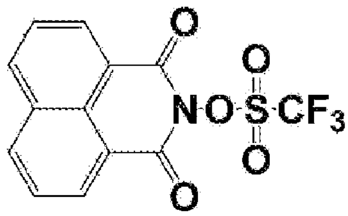

Formula (B-29)

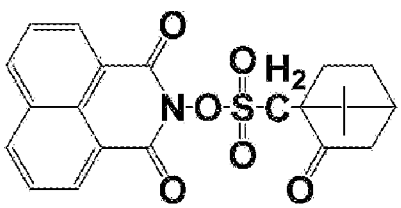

Formula (B-30)

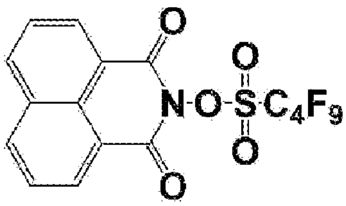

Formula (B-31)

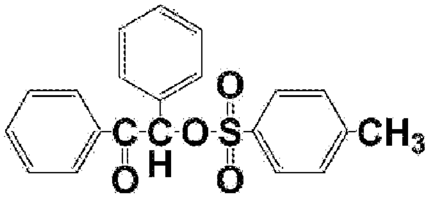

Formula (B-32)

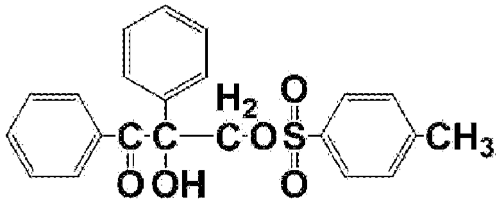

Formula (B-33)

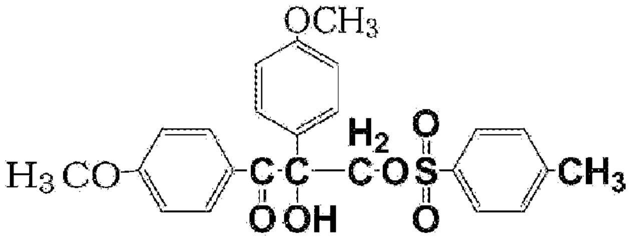

Formula (B-34)

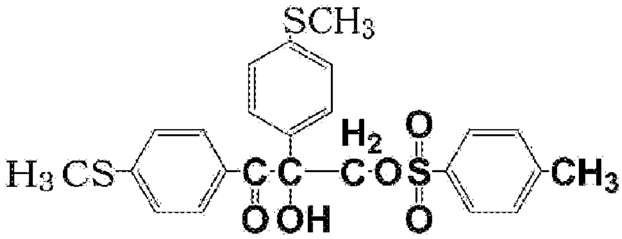

Formula (B-35)

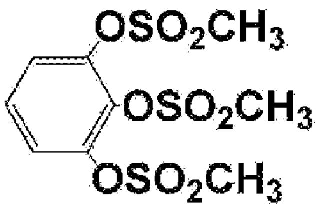

Formula (B-36)

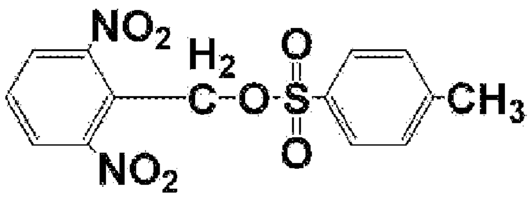

Formula (B-37)

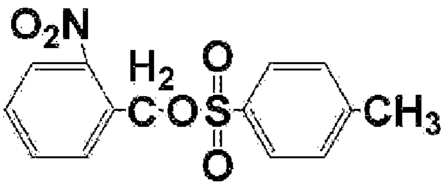

Formula (B-38)

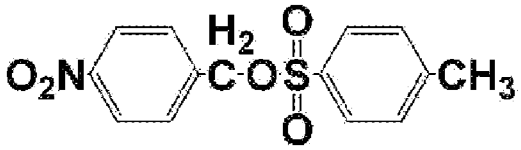

Formula (B-39)

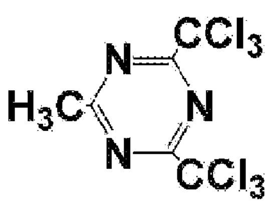

Formula (B-40)

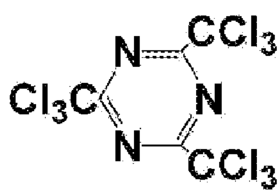

Formula (B-41)

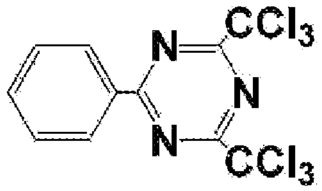

Formula (B-42)

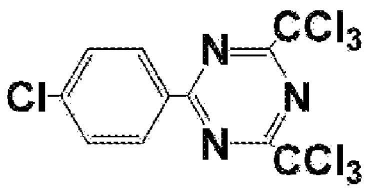

Formula (B-43)

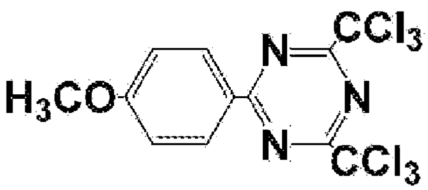

Formula (B-44)

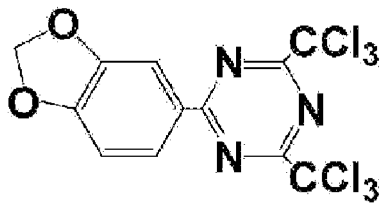

Formula (B-45)

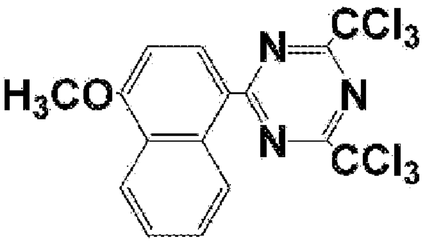

Formula (B-46)

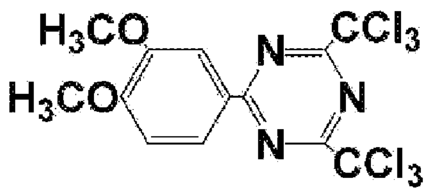

Formula (B-47)

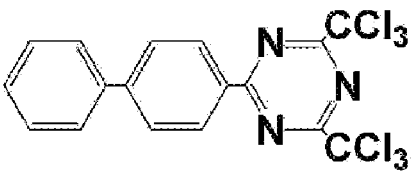

Formula (B-48)

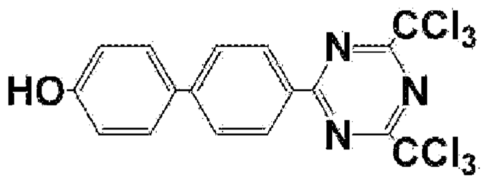

Formula (B-49)

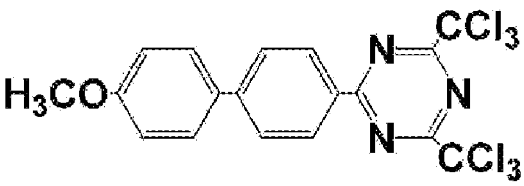

Formula (B-50)

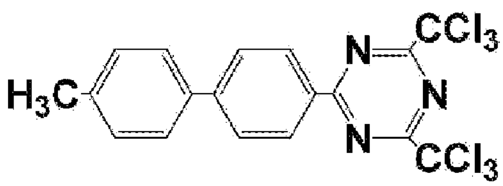

Formula (B-51)

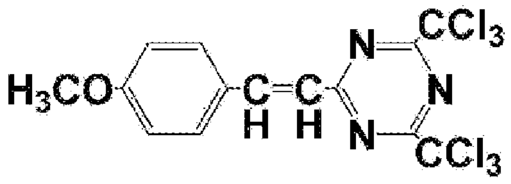

Formula (B-52)

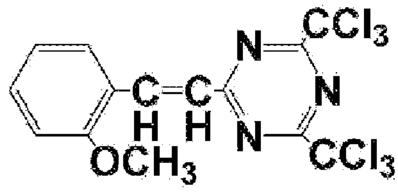

Formula (B-53)

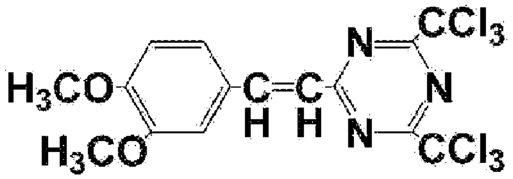

Formula (B-54)

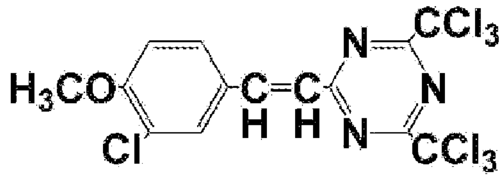

Formula (B-55)

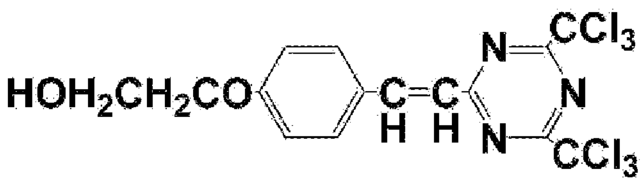

Formula (B-56)

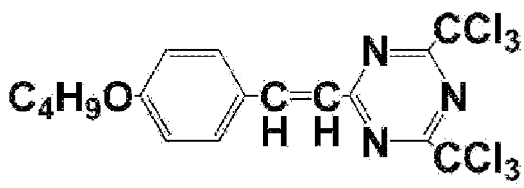

Formula (B-57)

As the photoacid generator, sulfonium salt compounds and iodonium salt compounds are preferable. Examples of these anions include $CF_3SO_3^-$, $C_4F_9SO_3^-$, $C_8F_{17}SO_3^-$, camphorsulfonic acid anions, tosylate anions, $BF_4^-$, $PF_6^-$, $AsF_6^-$ and $SbF_6^-$. Particularly, anions such as phosphorus hexafluoride and antimony hexafluoride, which exhibit strong acidity, are preferable.

The cured product-forming composition of the present invention may contain, as necessary, conventional additives. Examples of such additives include pigments, colorants, thickeners, sensitizers, antifoaming agents, leveling agents, coating improvers, lubricants, stabilizers (antioxidants, heat stabilizers, light-resistant stabilizers, etc.), plasticizers, surfactants, dissolution promoters, fillers, antistatic agents, and curing agents. These additives may be used alone or two or more thereof may be used in combination.

Examples of coating methods include a flow coating method, a spin coating method, a spray coating method, a screen printing method, a casting method, a bar coating method, a curtain coating method, a roll coating method, a gravure coating method, a dipping method, and a slit method.

In the present invention, a photocurable cured product-forming composition can be applied to a substrate and cured by light emission. In addition, heating can also be performed before and after light emission.

The thickness of the coating film can be selected from a range of about 0.01 μm to 10 mm depending on applications of the cured product, and for example, the thickness can be about 0.05 to 10 μm (particularly 0.1 to 5 μm) when used for a photoresist, about 5 μm to 5 mm (particularly 100 μm to 1 mm) when used for a printed circuit board,

and about 0.1 to 100 μm (particularly 0.3 to 50 μm) when used for an optical thin film.

The light to be emitted or exposed when a photoacid generator is used may be, for example, gamma rays, X-rays, ultraviolet light, or visible light, and generally, visible light or ultraviolet light, particularly ultraviolet light, are used in many cases. The light wavelength is, for example, 150 to 800 nm, preferably 150 to 600 nm, more preferably 200 to 400 nm, and particularly about 300 to 400 nm. The light emission intensity varies depending on the thickness of the coating film, and can be, for example, 2 to 20,000 $mJ/cm^2$, preferably about 5 to 5,000 $mJ/cm^2$. The light source can be selected depending on the type of light to be exposed, and for example, in the case of ultraviolet light, a low-pressure mercury lamp, a high-pressure mercury lamp, an ultra-high-pressure mercury lamp, a deuterium lamp, a halogen lamp, and a laser beam (helium-cadmium laser, excimer laser, etc.) can be used. According to such light emission, the curing reaction of the composition proceeds.

When a thermal acid generator is used or a photoacid generator is used, the coating film is heated, if necessary, after light emission, for example, at 60 to 250°C, preferably about 100 to 200°C. The heating time can be selected from a range of 3 seconds or longer (for example, about 3 seconds to 5 hours), and heating can be performed for, for example, 5 seconds to 2 hours, preferably 20 seconds to 30 minutes, and generally about 1 minute to 3 hours (for example, 5 minutes to 2.5 hours).

In addition, when a pattern or image is formed (for example, when a printed circuit board or the like is produced), the coating film formed on the substrate may be exposed in a pattern, and this pattern exposure may be performed by laser light scanning or may be performed by light emission through a photomask. A pattern or image can be formed by developing (or dissolving) the non-emitted area (unexposed area) produced by such pattern exposure with a developing agent.

As the developing solution, an alkaline aqueous solution or an organic solvent can be used.

Examples of alkaline aqueous solutions include aqueous solutions of alkali metal hydroxides such as potassium hydroxide, sodium hydroxide, potassium carbonate, and sodium carbonate, aqueous solutions of quaternary ammonium hydroxides such as tetramethylammonium hydroxide, tetraethylammonium hydroxide, and choline, and aqueous solutions of amines such as ethanolamine, propylamine, and ethylenediamine.

The alkaline developing solution is generally a 10% by mass or less aqueous solution, and preferably a 0.1 to 3.0% by mass aqueous solution can be used. In addition, alcohol and surfactants may be added to the developing solution for use, and each of these is preferably 0.05 to 10 parts by mass with respect to 100 parts by mass of the developing solution.

Among these, an aqueous solution containing 0.1 to 2.38% by mass of tetramethylammonium hydroxide can be used.

In addition, regarding the organic solvent as a developing solution, general organic solvents can be used, and examples thereof include acetone, acetonitrile, toluene, dimethylformamide, methanol, ethanol, isopropanol, propylene glycol methyl ether, propylene glycol ethyl ether, propylene glycol propyl ether, propylene glycol butyl ether, propylene glycol methyl ether acetate, propylene glycol ethyl ether acetate, propylene glycol propyl ether acetate propylene glycol butyl ether acetate, ethyl lactate, and cyclohexanone, and these may be used alone or two or more thereof may be used in combination. Particularly, propylene glycol methyl ether, propylene glycol methyl ether acetate, ethyl lactate and the like can be preferably used.

In the present invention, a surfactant may be added in order to improve coating properties. Such surfactants include, but are not particularly limited to, fluorine surfactants, silicone surfactants, nonionic surfactants and the like. The surfactants may be used alone or two or more thereof may be used in combination.

Among these surfactants, fluorine surfactants are preferable because they have a strong coating property improving effect. Specific examples of fluorine surfactants include EFTOP EF301, EF303, and EF352 (product name, commercially available from Tochem Products Co., Ltd.), Megaface F171, F173, R-30, R-08, R-90, BL-20, and F-482 (product name, commercially available from Dainippon Ink and Chemicals, Inc.), Fluorad FC430, and FC431 (product name, commercially available from Sumitomo 3M Ltd.), and AsahiGuard AG710, Surflon S-382, SC101, SC102, SC103, SC104, SC105, and SC106 (product name, commercially available from Asahi Glass Co., Ltd), but the present invention is not limited thereto.

The amount of the surfactant added in the cured product-forming composition of the present invention is 0.0008 to 4.5% by mass, preferably 0.0008 to 2.7% by mass, and more preferably 0.0008 to 1.8% by mass based on the solid content.

In the present invention, in order to improve adhesion to the substrate after development, an adhesion promoting agent can be added. Examples of these adhesion promoting agents include chlorosilanes such as trimethylchlorosilane, dimethylvinylchlorosilane, methyldiphenylchlorosilane, and chloromethyldimethylchlorosilane, alkoxysilanes such as trimethylmethoxysilane, dimethyldiethoxysilane, methyldimethoxysilane, dimethylvinylethoxysilane, diphenyldimethoxysilane, and phenyltriethoxysilane, silazanes such as hexamethyldisilazane, N,N'-bis(trimethylsilyl)urea, dimethyltrimethylsilylamine, and trimethylsilylimidazole, silanes such as vinyl trichlorosilane, γ-chloropropyltrimethoxysilane, γ-aminopropyltriethoxysilane, γ-methacryloxypropyltrimethoxysilane, γ-glycidoxypropyltrimethoxysilane, and γ-(N-piperidinyl)propyltrimethoxysilane, heterocyclic compounds such as benzotriazole, benzimidazole, indazole, imidazole, 2-mercaptobenzimidazole, 2-mercaptobenzothiazole, 2-mercaptobenzoxazole, urazole, thiouracil, mercaptoimidazole, and mercaptopyrimidine, ureas such as 1,1-dimethylurea, and 1,3-dimethylurea, and thiourea compounds. The adhesion promoting agents may be used alone or two or more thereof may be used in combination. The amount of these adhesion promoting agents added based on the solid content is generally 18% by mass or less, preferably 0.0008 to 9% by mass, and more preferably 0.04 to 9% by mass.

In the present invention, a sensitizer may be included. Examples of sensitizers that can be used include anthracene, phenothiazene, perylene, thioxanthone, and benzophenone thioxanthone. In addition, examples of sensitizing dyes include thiopyrylium salt dyes, merocyanine dyes, quinoline dyes, styryl quinoline dyes, ketocoumarin dyes, thioxanthene dyes, xanthene dyes, oxonol dyes, cyanine dyes, rhodamine dyes, and pyrylium salt dyes. A particularly preferable sensitizer is an anthracene sensitizer, which dramatically improves sensitivity when used in combination with a cationic curing catalyst (radiation-sensitive cationic polymerization initiator), and also has a radical polymerization initiation function, and in a hybrid type in which the cationic curing system and the radical curing system of the present invention are used together, catalyst species can be simplified. As a specific anthracene compound, dibutoxyanthracene, dipropoxyanthraquinone and the like are effective. Regarding the amount of the sensitizer added based on the solid content, a proportion of 0.01 to 20% by mass, preferably 0.01 to 10% by mass, is used.

In the present invention, a cured product-forming composition containing an epoxy compound is photocured or thermally cured using a photoacid generator or a thermal acid generator. Because a photoacid generator or a thermal acid generator is used, a generally used epoxy curing agent (for example, an amine or acid anhydride) is not used, or even if it is used, the content thereof is very small, and thus the storage stability of the composition containing the epoxy compound is improved.

It has been found that the composition containing the liquid epoxy compound has photocationic polymerizability. It has a higher curing rate than conventional liquid epoxy compounds (for example, an alicyclic epoxy compound having an epoxycyclohexyl ring). Since the curing rate is fast, it is possible to reduce the amount of the acid generator added or to use a weak acid type acid generator. Reducing the amount of the acid generator is important to prevent metal corrosion because acid active species may remain after UV emission. Since the curing rate is fast, thick film curing is possible.

Curing by UV emission can be applied to a thermally weak material (substance).

Thermosetting materials and photocuring materials using the cured product-forming composition containing an epoxy compound of the present invention have features such as fast curing, transparency, and low curing shrinkage, and can be used for coating and adhering electronic parts, optical parts, and precision mechanical parts. These can be used for adhering, for example, mobile phone and camera lenses, optical elements such as light emitting diodes (LED) and laser diodes (LD), parts such as liquid crystal panels, biochips, camera lenses and prisms, magnetic parts of hard disks such as personal computers, pick-ups in CD and DVD players (the part that fetches optical information reflected from the disk), cones and coils in speakers, magnets in motors, circuit substrates, electronic parts, and parts inside engines of automobiles and the like.

Hard coating materials used for protecting the surfaces of automobile bodies, lamps, electric appliances, building materials, plastics and the like can be applied to, for example, automobiles, motorcycle bodies, head light lenses and mirrors, plastics lenses for glasses, mobile phones, game consoles, optical films, ID cards and the like.

Examples of ink materials for printing on metals such as aluminum, plastics and the like include cards such as credit cards and membership cards, inks for printing on switches and keyboards for electric appliances and OA instruments, and inks for inkjet printers for CDs, DVDs and the like.

A technique for curing a resin in combination with a 3D CAD to create a complex 3D object, application to optical modeling such as model production of industrial products, and application to optical fiber coating, adhesion, optical waveguides, thick film resists and the like are exemplified.

In addition, the cured product-forming composition containing an epoxy compound of the present invention can be suitably used as insulating resins for electronic materials such as semiconductor encapsulation materials, adhesives for electronic materials, printed circuit board materials, interlayer insulating film materials, and encapsulants for power modules, and insulating resins used in high-voltage devices such as generator coils, transformer coils, and gas insulated switchgears.

## Examples

### (Analysis method)

#### [Measurement of $SiO_2$ concentration]

A silica sol was put into a crucible and dried at 130°C, the obtained gel was then baked at 1,000°C, and the

baking residue was weighed for calculation.

[Measurement of average primary particle diameter (particle diameter determined by nitrogen adsorption method)]

The specific surface area of the acidic silica sol dry powder at 300°C was measured using a specific surface area measuring device Monosorb (registered trademark) MS-16 (commercially available from Yuasa Ionics).

[Measurement of water]

The water was measured by a Karl Fischer titration method.

[Measurement of average particle diameter]

In order to measure the average particle diameter by a dynamic light scattering method, an organic solvent-dispersed silica sol was diluted with a disperse solvent and the average particle diameter was measured using a dynamic light scattering method particle diameter measuring device (ZETASIZER Nano series, commercially available from Malvern Instruments LTD). When the dispersion medium was an organic substance having a carbonyl structure, dilution was performed in the dispersion medium to a predetermined concentration and measurement was performed. When the dispersion medium was an organic substance having an epoxy group, dilution was performed in methyl ethyl ketone to a predetermined concentration, and measurement was performed.

[Measurement of viscosity]

The viscosity of the organic solvent-dispersed silica sol (the dispersion medium was an organic substance having a carbonyl structure) was measured with an Ostwald viscometer. The viscosity of the resin monomer (the dispersion medium was an organic substance having an epoxy group) disperse sol was measured using a B-type rotational viscometer (commercially available from Toki Sangyo Co., Ltd.).

[Alkoxy group content analysis method]

4 ml of a silica sol was vacuum-dried at 60°C for 4 hours, the obtained gel was pulverized in a mortar, and dried under a normal pressure at 150°C for 2 hours to obtain a dry powder. 0.2 g of the powder obtained above was mixed with 10 ml of a 0.05 N sodium hydroxide aqueous solution, dispersed in an ultrasonic cleaning machine (40 kHz) for 20 minutes, and then left at room temperature for 1 day, the solution portion was then measured through gas chromatography, and the alkoxy group content (groups/$nm^2$) per unit area of the silica surface was measured.

[Measurement of pH]

A liquid obtained by mixing a silica sol, methanol and pure water at a weight ratio of 1:1:1 was measured with a pH meter.

[Measurement of methanol]

Methanol was measured by gas chromatography measurement.

[Measurement of epoxy equivalents]

0.3 g of a resin monomer-dispersed (the dispersion medium was an organic substance having an epoxy group) sol was weighed out and put into a glass beaker, 10 ml of chloroform was additionally added, and the mixture was stirred using a magnetic stirrer. 20 ml of acetic acid was added to the solution, 20 ml of a tetraethylammonium bromide acetic acid solution (0.25 g/ml acetic acid) was then added and the mixture was stirred. Using an automatic titration device COM-1700A (commercially available from HIRANUMA), the solution was potentiometrically titrated with a perchloric acid-acetic acid standard solution (0.1 mol/L), and the epoxy equivalent was calculated according to JIS K 7236 (2001).

[Active epoxy group content analysis method]

A silica sol 10 (g) was weighed out and put into a glass beaker, 10 ml of acetone or chloroform was additionally added, and the mixture was stirred using a magnetic stirrer. 20 ml of acetic acid was added to the solution, 20 ml of a

tetraethylammonium bromide acetic acid solution (0.25 g/ml acetic acid) was then added and the mixture was stirred. Using an automatic titration device COM-1700A (commercially available from HIRANUMA), the solution was potentiometrically titrated with a perchloric acid-acetic acid standard solution (0.1 mol/L), and the epoxy equivalent D (g/eq) was calculated according to JIS K 7236 (2001).

The active epoxy group content (groups/$nm^2$) was calculated according to the following formula.

Active epoxy group (groups/$nm^2$) = NA / [D(g/eq) $\times$ S($m^2$/g) $\times$ $10^{18}$ $\times$ $SiO_2$ content (%) in silica sol / 100]

NA: Avogadro constant
S: specific surface area of particle ($m^2$/g)=2720/average primary particle diameter (nm)

[Evaluation of physical properties of cured epoxy product]

The obtained silica-containing cured epoxy resin product was subjected to measurement of a 3-point bending strength test, a glass transition temperature, a coefficient of linear expansion, and a transmittance.

[Measurement of 3-point bending strength]

Measurement was performed using a tensile testing machine based on JIS K-6911.

The height and width of a test piece were measured, the test piece was supported, a load was applied to the center with a pressure wedge, the load when the test piece was broken was measured, and the bending strength ($\sigma$) was calculated. The bending strength $\sigma$: (MPa){kgf/$mm^2$}, P: load when the test piece was broken (N){kgf}, L: inter-fulcrum distance (mm), W: width of the test piece (mm), h: height of the test piece (mm).

$$\sigma=(3PL)/(2Wh^2)$$

When the bending elastic modulus (E): (MPa){kgf/$mm^2$} is F/Y: the gradient of the straight line part of the load-deflection curve (N/mm){kgf/mm}, the following formula is obtained.

$$E=[L^3/(4Wh^3)]\times[F/Y]$$

[Measurement of glass transition temperature]

The glass transition temperature was determined from a DSC curve obtained under conditions of a temperature range of 30°C to 250°C and a heating rate of 5°C/min using a differential scanning calorimeter (DSC3500: commercially available from Netch Japan Co., Ltd.) as a measuring device.

[Measurement of coefficient of linear expansion]

The coefficient of linear expansion was measured based on JIS K-6911. The thickness of the test piece was accurately measured using Thermal Mechanical Analysis (TMA) at a load of 0.05 N and a heating rate of 1°C/min. The coefficient of linear expansion $\alpha_1$ was determined by the amount of change in length of the test piece at 30 to 80°C($\Delta$L1)/initial length of the test piece (L)$\times$50=$\alpha_1$.

[Measurement of transmittance]

The transmittance at 520 nm was measured using a spectrophotometer (model UV-3600: commercially available from Shimadzu Corporation).

I [Production of organosol containing epoxy group-containing silica particles]

(Example 1)

A water-dispersed silica sol (with an average primary particle diameter of 12 nm, a pH of 3, and a silica

concentration of 33% by mass, commercially available from Nissan Chemical Corporation) was prepared.

1,000 g of the silica sol was put into a glass reactor with an internal volume of 2 L including a stirrer, a condenser, a thermometer and two inlets, and while the sol in the reactor was still boiling, methanol vapor generated in another boiler was continuously blown into the silica sol in the reactor, and water was substituted with methanol while gradually raising the liquid level. When the volume of the distillate reached 9 L, the substitution was completed, and 1,100 g of a methanol-dispersed silica sol was obtained. The obtained methanol-dispersed silica sol had a $SiO_2$ concentration of 30.5% by mass, 1.6% by mass of water, and a viscosity of 2 mPa·s.

600 g of the methanol-dispersed silica sol was put into a 1 L eggplant flask, and while stirring the sol with a magnetic stirrer, 0.9 g of tri-n-pentylamine was added, 17.5 g of 2-(3,4-epoxycyclohexyl)ethyltrimethoxysilane (product name KBM-303, commercially available from Shin-Etsu Chemical Co., Ltd.) was added, and the mixture was then maintained at a liquid temperature of 60°C for 2 hours. Next, 32.4 g of phenyltrimethoxysilane (product name KBM-103, commercially available from Shin-Etsu Chemical Co., Ltd.) was added, and the mixture was then maintained at a liquid temperature of 60°C for 2 hours. Then, distillation was performed in a rotary evaporator at a bath temperature of 80°C under a reduced pressure of 500 to 350 Torr while supplying methyl ethyl ketone and thus a methyl ethyl ketone-dispersed silica sol (30.5% by mass of $SiO_2$, a viscosity (20°C) of 1.13 mPa s, 0.05% by mass of water, 0.05% by mass of methanol, a pH of 8.46, a particle diameter (determined by a dynamic light scattering method) of 14.8 nm, an active epoxy content of 0.80 groups/$nm^2$, and a methoxy group content of 1.2 groups/$nm^2$) was obtained. The rate of change from the initial particle diameter (determined by a dynamic light scattering method) of the obtained methyl ethyl ketone-dispersed silica sol after storage at 50°C for 7 days was within 20%.

Similarly, compositions were produced according to formulation proportions of Example 2 to Example 7, and Comparative Examples 1 to 3, and physical properties were evaluated. Table 1 to Table 3 shows the results.

[Table 1]

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| A-1 | 600 | 600 | 600 | 600 | 600 | 600 | 600 | 600 | 600 | 600 |
| A-2 | 30.72 | 30.9 | 30.72 | 40.57 | 35.42 | 35.67 | 40.64 | 30.72 | 30.72 | 30.72 |
| A-3 | 11.73 | 11.38 | 11.73 | 45.57 | 82 | 84.55 | 22.00 | 11.73 | 11.73 | 11.73 |
| A-4 | 1.59 | 1.66 | 1.59 | 1.52 | 1.71 | 1.52 | 1.91 | 1.59 | 11.3 | 19.5 |
| A-5 | 3.32 | 3.25 | 3.32 | 3.28 | 3.07 | 3.07 | 3.12 | 3.32 | 3.30 | 3.30 |
| B-1 | TnPnA | TnPnA and DiPA | DiPA | DiPA | DiPA | TnPnA | DiPEA | None | DiPA | DiPA |
| B-2 | 0.9 | 1.2+ 0.18 | 0.74 | 0.97 | 0.85 | 0.34 | 0.48 | None | 0.74 | 0.74 |
| B-3 | 7.87 | 8.68 | 8.64 | 10.32 | 10.72 | 8.02 | 7.75 | 3.58 | 8.50 | 8.47 |

A-1: indicates the mass (g) of the methanol-dispersed silica sol in the process (A).
A-2: indicates the $SiO_2$ content (%) in the methanol-dispersed silica sol in the process (A).
A-3: indicates the average particle diameter (nm) of $SiO_2$ particles in the methanol-dispersed silica sol in the process (A) determined by a BET method.
A-4: indicates the water content (%) of the methanol-dispersed silica sol in the process (A).
A-5: indicates the pH of the methanol-dispersed silica sol in the process (A), and the pH was measured when the silica sol:pure water were mixed at a mass ratio of 1:1.
B-1: indicates the type of the basic substance added in the process (B). TnPnA indicates tri-n-pentylamine, DiPA indicates diisopropylamine, and DiPEA indicates diisopropylmonoethylamine.
B-2: indicates the amount (g) of the basic substance added in the process (B).
B-3: indicates the pH of the methanol-dispersed silica sol after the basic substance was added in the process (B), and the pH of a liquid obtained by mixing the silica sol: methanol:pure water at a mass ratio of 1:1:1 was measured. In Comparative Example 1, (B-3) shows the result obtained by re-measuring (A-5).

[Table 2]

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| C-1 | 17.5 | 9.1 | 17.49 | 5.9 | 3.3 | 11.3 | 5.9 | 17.49 | 17.49 | 17.49 |
| C-2 | 60°C for 2 hours | 60°C for 2 hours | 60°C for 2 hours | 60°C for 2 hours | 60°C for 2 hours | 60°C for 3 hours | 60°C for 2 hours | 60°C for 2 hours | 60°C for 2 hours | 60°C for 2 hours |
| C-3 | 32.4 | 40.9 | 21.1 | 7.2 | 4.0 | None | 24.8 | 21.1 | 21.1 | 21.1 |
| C-4 | 60°C for 2 hours | 60°C for 2 hours | 60°C for 2 hours | 60°C for 2 hours | 60°C for 2 hours | None | 60°C for 2 hours | 60°C for 2 hours | 60°C for 2 hours | 60°C for 2 hours |

C-1: indicates the amount (g) of 2-(3,4-epoxycyclohexyl)ethyltrimethoxysilane added in the process (C) in Examples 1 to 6 and comparative examples and indicates the amount (g) of 3-glycidoxypropyltrimethoxysilane added in the process (C) in Example 7.
C-2: indicates reaction conditions after 2-(3,4-epoxycyclohexyl)ethyltrimethoxysilane or 3-glycidoxypropyltrimethoxysilane was added in the process (C).
C-3: indicates the amount (g) of phenyltrimethoxysilane added in the process (C).
C-4: indicates reaction conditions after phenyltrimethoxysilane was added in the process (C).

[Table 3]

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| D-1 | MEK | MIBK | MEK | MEK | MEK | MEK | MEK | MEK | MEK | MEK |
| D-2 | 650 | 660 | 640 | 810 | 700 | 700 | 799 | 960 | 652 | 940 |
| D-3 | 30.5 | 30.1 | 30.6 | 30.5 | 30.6 | 30.5 | 30.5 | 20.4 | 30.4 | 20.6 |
| D-4 | 0.05 | 0.07 | 0.04 | 0.05 | 0.06 | 0.05 | 0.05 | 0.07 | 0.24 | 0.13 |
| D-5 | 0.05 | 1.71 | 1.19 | 0.50 | 0.50 | 0.50 | 1.4 | 1.00 | 0.10 | 0.10 |
| D-6 | 1.13 | 1.52 | 1.22 | 1.70 | 1.04 | 1.10 | 1.62 | 34.4 | 2.47 | 2.28 |
| D-7 | 8.46 | 9.52 | 8.80 | 9.13 | 9.07 | 8.20 | 7.77 | 3.78 | 8.49 | 8.25 |
| D-8 | 14.8 | 13.3 | 17.4 | 79.4 | 125.4 | 128 | 41 | 239.6 | 26.8 | 52.5 |
| D-9 | 0.80 | 0.48 | 0.88 | 0.91 | 1.0 | 3.40 | 0.48 | 0.1 or less | 0.85 | 0.77 |
| D-10 | 1.20 | 1.15 | 1.37 | 1.20 | 1.23 | 1.20 | 1.50 | 0.48 | 0.39 | 0.19 |
| D-11 | 2700 | 2100 | 2700 | 2500 | 2600 | 2700 | 2270 | 2700 | 2700 | 2700 |
| D-12 | 1.15 | 1.57 | 1.27 | 1.68 | 1.04 | 1.20 | 1.67 | 100 or more | 100 or more | 15.4 |
| D-13 | 15.9 | 13.7 | 17.7 | 78.7 | 125 | 128 | 40 | 308 | 266 | 115 |

(continued)

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| D-14 | 0.72 | 0.44 | 0.85 | 0.77 | 1.00 | 3.20 | 0.45 | 0.1 or less | 0.81 | 0.77 |

D-1: indicates the type of the organic substance having a carbonyl structure as a dispersion medium used in the process (D). MEK indicates methyl ethyl ketone, and MIBK indicates methyl isobutyl ketone.

D-2: indicates the yield (g) of a silica sol using the organic substance having a carbonyl structure obtained in the process (D) as a dispersion medium.

D-3: indicates the $SiO_2$ content (%) in the silica sol using the organic substance having a carbonyl structure obtained in the process (D) as a dispersion medium.

D-4: indicates the water content (%) in the silica sol using the organic substance having a carbonyl structure obtained in the process (D) as a dispersion medium.

D-5: indicates the methanol content (%) in the silica sol using the organic substance having a carbonyl structure obtained in the process (D) as a dispersion medium.

D-6: indicates the viscosity (mPa·s) of the silica sol measured with an Ostwald viscometer using the organic substance having a carbonyl structure obtained in the process (D) as a dispersion medium.

D-7: indicates the pH of the silica sol using the organic substance having a carbonyl structure as a dispersion medium in the process (D), and the pH was measured when the silica sol:pure water:methanol were mixed at a mass ratio of 1:1:1.

D-8: indicates the silica particle diameter (nm) of the silica sol using the organic substance having a carbonyl structure as a dispersion medium in the process (D) measured by a dynamic light scattering method.

D-9: indicates the active epoxy content (groups/$nm^2$) of the silica sol using the organic substance having a carbonyl structure as a dispersion medium in the process (D).

D-10: indicates the number of methoxy groups (groups/$nm^2$) of the silica sol using the organic substance having a carbonyl structure as a dispersion medium in the process (D).

D-11: indicates the aluminum content (ppm/$SiO_2$) in terms of $Al_2O_3$ in the silica sol using the organic substance having a carbonyl structure as a dispersion medium in the process (D).

D-12: indicates the viscosity (mPa·s) of the silica sol using the organic substance having a carbonyl structure as a dispersion medium in the process (D) after storage at 50°C for 7 days, the viscosity being measured with an Ostwald viscometer.

D-13: indicates the silica particle diameter (nm) of the silica sol using the organic substance having a carbonyl structure as a dispersion medium in the process (D) measured by a dynamic light scattering method after storage at 50°C for 7 days.

D-14: indicates the active epoxy content (groups/$nm^2$) of the silica sol using the organic substance having a carbonyl structure as a dispersion medium in the process (D) after storage at 50°C for 7 days.

II [Production of silica sol in which epoxy group-containing silica particles were dispersed in epoxy monomer]

255 g of a mixture monomer of a bisphenol A type epoxy resin and a bisphenol F type epoxy resin (product name EXA-830LVP, commercially available from DIC) was added to 400 g of a silica sol (methyl ethyl ketone-dispersed silica sol) using the organic substance having a carbonyl structure as a dispersion medium in the process (D) in Example 1, solvent removal was performed at a bath temperature of 100°C and 200 to 30 Torr to obtain a mixed resin monomer-dispersed silica sol of a bisphenol A type epoxy resin and a bisphenol F type epoxy resin. The obtained silica sol had a $SiO_2$ concentration of 30.7% by mass, a methanol and methyl ethyl ketone content of less than 0.1% by mass, a type B viscosity of 7,820 mPa’s at 25°C, and a particle diameter (determined by a dynamic light scattering method) of 18.8 nm measured after dilution with methyl ethyl ketone. The rate of change from the initial particle diameter (determined by a dynamic light scattering method) of the obtained mixed resin monomer-dispersed silica sol diluted with methyl ethyl ketone after storage at 50°C for 7 days was within 20%.

In addition, an alicyclic epoxy resin monomer (product name Celloxide 2021P: commercially available from Daicel Corporation) was added to a silica sol (methyl ethyl ketone-dispersed silica sol) using the organic substance having a carbonyl structure as a dispersion medium in the process (D) in Example 1, and the same treatment was performed to obtain an alicyclic epoxy resin monomer-dispersed silica sol.

Then, epoxy resin monomer-dispersed silica sols were obtained by changing the silica sol (methyl ethyl ketone-dispersed silica sol) using the organic substance having a carbonyl structure as a dispersion medium in the process (D) in Example 1 and Example 5 to a liquid epoxy resin monomer (product name YDF-8170C, commercially available from NIPPON STEEL Chemical & Material Co., Ltd.).

Table 4 shows the results of the obtained epoxy resin monomer-dispersed silica sols Nos. 1 to 4.

[Table 4]

| Raw material organosol | Example 1 | Example 1 | Example 1 | Example 5 |
|---|---|---|---|---|
| Epoxy monomer sol | No. 1 | No. 2 | No. 3 | No. 4 |
| D-15 | Epoxy mixture of bisphenol F type and bisphenol A type | Bisphenol F type epoxy | Alicyclic epoxy | Bisphenol F type epoxy |
| D-16 | EXA830LVP | YDF-8170C | Celloxide 2021P | YDF-8170C |
| D-17 | 255 | 255 | 455 | 275 |
| D-18 | 400 | 400 | 400 | 400 |
| D-19 | 500 to 100 torr for 1 hour, and then 30 torr for 3 hours | 500 to 100 torr for 1 hour, and then 30 torr for 3 hours | 500 to 100 torr for 1 hour, and then 30 torr for 3 hours | 500 to 100 torr for 1 hour, and then 30 torr for 3 hours |
| D-20 | 100 | 100 | 80 | 100 |
| D-21 | 30.7 | 30.5 | 20.5 | 30.5 |
| D-22 | 0.1 | 0.1 | 0.1 | 0.1 |
| D-23 | 0.035+0.005 | 0+0.05 | 0+0.05 | 0+0.05 |
| D-24 | 7820 | 8000 | 800 | 8000 |
| D-25 | 18.8 | 18.0 | 20 | 125 |
| D-26 | 245.9 | 245 | 180 | 244 |
| D-27 | 7080 | 8200 | 900 | 8200 |
| D-28 | 18.4 | 18 | 23 | 125 |

(continued)

| Raw material organosol | Example 1 | Example 1 | Example 1 | Example 5 |
|---|---|---|---|---|
| Epoxy monomer sol | No. 1 | No. 2 | No. 3 | No. 4 |
| D-29 | 246.2 | 247 | 183 | 246 |

D-15: indicates the type of the epoxy monomer when solvent substitution was performed from the silica sol using the organic substance having a carbonyl structure as a dispersion medium in the process (D) in Example 1 and Example 5 to the silica sol using the organic substance having an epoxy group as a dispersion medium.
D-16: indicates the product name of the epoxy monomer used in D-15.
D-17: indicates the content (g) of the epoxy monomer.
D-18: indicates the content (g) of the silica sol using the organic substance having a carbonyl structure as a dispersion medium in the process (D) in Example 1 and Example 5.
D-19: indicates conditions when solvent substitution was performed from the silica sol using the organic substance having a carbonyl structure as a dispersion medium in the process (D) in Example 1 and Example 3 to the silica sol using the organic substance having an epoxy group as a dispersion medium.
D-20: indicates the temperature (°C) of the heating bath in D-19.
D-21: indicates the $SiO_2$ content (%) of the silica sol using the organic substance having an epoxy group as a dispersion medium in the process (D) in Example 1 and Example 5.
D-22: indicates the water content (%) of the silica sol using the organic substance having an epoxy group as a dispersion medium in the process (D) in Example 1 and Example 5.
D-23: indicates the content (%) of methanol and the organic substance having a carbonyl structure, the methanol and the organic substance being contained in the silica sol using the organic substance having an epoxy group as a dispersion medium in the process (D) in Example 1 and Example 5.
D-24: indicates the viscosity (mPa·s) of the silica sol using the organic substance having an epoxy group as a dispersion medium in the process (D) in Example 1 and Example 5 measured with a B-type rotational viscometer.
D-25: indicates the average particle diameter (nm) of silica particles in the silica sol using the organic substance having an epoxy group as a dispersion medium in the process (D) in Example 1 and Example 5, the silica particle diameter being determined by a dynamic light scattering method.
D-26: indicates the epoxy equivalent (g/eq) in the silica sol using the organic substance having an epoxy group as a dispersion medium in the process (D) in Example 1 and Example 5.
D-27: indicates the viscosity (mPa·s) of the silica sol using the organic substance having an epoxy group as a dispersion medium in the process (D) in Example 1 and Example 5 after storage at 50°C for 7 days, the viscosity being measured with a B-type rotational viscometer.
D-28: indicates the silica particle diameter (nm) of the silica sol using the organic substance having an epoxy group as a dispersion medium in the process (D) in Example 1 and Example 5 measured by a dynamic light scattering method after storage at 50°C for 7 days.
D-29: indicates the epoxy equivalent (g/eq) in the silica sol using the organic substance having an epoxy group as a dispersion medium in the process (D) in Example 1 and Example 5 after the silica sol was stored at 50°C for 7 days.

III [Thermosetting product containing epoxy group-containing silica particles]

An alicyclic epoxy resin monomer (product name Celloxide 2021P: commercially available from Daicel Corporation) was added to the silica sol (methyl ethyl ketone-dispersed silica sol) using the organic substance having a carbonyl structure as a dispersion medium in the process (D) in Example 1, and solvent removal was performed at a bath temperature of 100°C under a reduced pressure of 200 to 10 Torr to obtain an alicyclic epoxy resin monomer-dispersed silica sol (having a $SiO_2$ concentration of 20% by mass, and a methanol and methyl ethyl ketone content of less than 0.1% by mass). A curing agent (a mixture of methyl hexahydrophthalic anhydride and hexahydrophthalic anhydride) was added to the alicyclic epoxy resin monomer-dispersed silica sol and stirred using a vacuum degassing machine V-mini300 (commercially available from EME Corporation) to obtain a mixture. Next, dimethylbenzylamine was added as a cure promoting agent to the mixture and stirred using a vacuum degassing machine to obtain a silica-containing epoxy resin curing composition. The obtained silica-containing epoxy resin curing composition was poured into a casting plate (a glass plate treated with a fluorine-based mold release agent, and the distance between two glass plates was 3 mm thick) and heated at 90°C for 2 hours and then at 150°C for 8 hours to obtain a silica-containing epoxy resin thermosetting product.

A bisphenol F type liquid epoxy resin (product name YDF-8170C, commercially available from NIPPON STEEL Chemical & Material Co., Ltd.) was added to the silica sol (methyl ethyl ketone-dispersed silica sol) using the organic substance having a carbonyl structure as a dispersion medium in the process (D) in Example 1, and a liquid epoxy resin monomer (product name YDF-8170C, commercially available from NIPPON STEEL Chemical & Material Co., Ltd.), a curing agent (3,3-diethyl-4,4'-diamino diphenyl methane (product name Kayahard AA, commercially available from Nippon Kayaku Co., Ltd.) and diethyltoluenediamine (product name ETHACURE 100, commercially available from Albemarle Corporation)) were added to the epoxy resin monomer-dispersed silica sol which had been treated in the same manner and stirred, and a silica-containing epoxy resin thermosetting product was then obtained in the same manner.

A bisphenol F type liquid epoxy resin (product name YDF-8170C, commercially available from NIPPON STEEL Chemical & Material Co., Ltd.) was added to the silica sol using the organic substance having a carbonyl structure as a dispersion medium in the process (D) in Example 5, and a liquid epoxy resin monomer (product name YDF-8170C, commercially available from NIPPON STEEL Chemical & Material Co., Ltd.), a curing agent (3,3'-diethyl-4,4'-diaminodiphenylmethane (product name Kayahard AA, commercially available from Nippon Kayaku Co., Ltd.) and diethyltoluenediamine (product name ETHACURE 100, commercially available from Albemarle Corporation)) were added to the epoxy resin monomer-dispersed silica sol which had been treated in the same manner and stirred, and a silica-containing epoxy resin thermosetting product was then obtained in the same manner.

Here, as Reference Example 1, an alicyclic epoxy resin monomer (Celloxide 2021P: commercially available from Daicel Corporation), methyl hexahydrophthalic anhydride as a curing agent, and dimethylbenzylamine as a cure promoting agent were mixed to obtain an epoxy resin thermosetting product containing no silica sol. Heat curing was performed in the same manner.

Table 5 shows the epoxy resin compositions using the silica sol using the organic substance having a carbonyl structure as a dispersion medium in Example 1 and Example 5, the epoxy resin compositions containing no silica sol of Reference Examples 1 and 2, and formulations and thermosetting physical properties thereof.

[Table 5]

| Raw material organosol | Example 1 | Example 1 | Example 5 | Reference Example 1 | Reference Example 2 |
|---|---|---|---|---|---|
| Epoxy monomer sol | No. 2 | No. 3 | No. 4 | None | None |
| E-1 | 68 | 52.6 | 67 | None | None |
| E-2 | 0 | 0 | 0 | 46 | 0 |
| E-3 | 11 | 0 | 11 | 0 | 80 |
| E-4 | 20 | 10 | 20 | 0 | 0 |
| E-5 | 0 | 46.9 | 0 | 53.6 | 0 |
| E-6 | 10 | 0 | 11 | 0 | 14.8 |
| E-7 | 10 | 0 | 11 | 0 | 14.8 |
| E-8 | 0 | 0.4 | 0 | 0.46 | 0 |
| E-9 | Heated at 120°C for 1 hour and then 165°C for 2 hours | Heated at 90°C for 2 hours and then 150°C for 8 hours | Heated at 120°C for 1 hour and then 165°C for 2 hours | Heated at 90°C for 2 hours and then 150°C for 8 hours | Heated at 120°C for 1 hour and then 165°C for 2 hours |
| E-10 | 115 | 183.2 | 123 | 182.3 | 126 |
| E-11 | 50 | 60 | 50 | 65 | 62 |
| E-12 | 162 | 140 | 169 | 158 | 191 |
| E-13 | 160 | 151 | 164 | 129 | 143 |
| E-14 | 4813 | 4596 | 4962 | 4216 | 3674 |

(continued)

| Raw material organosol | Example 1 | Example 1 | Example 5 | Reference Example 1 | Reference Example 2 |
|---|---|---|---|---|---|
| Epoxy monomer sol | No. 2 | No. 3 | No. 4 | None | None |
| E-15 | 73 | 80 | 1 or less | 87 | 82 |

E-1: indicates the mass (g) of the epoxy resin monomer-dispersed silica sol (Nos. 2, 3, and 4) added in Example 1 and Example 5.
E-2: indicates the mass (g) of the alicyclic epoxy resin monomer added (product name Celloxide 2021P: commercially available from Daicel Corporation).
E-3: indicates the mass (g) of the liquid epoxy resin monomer added (product name YDF-8170C, commercially available from NIPPON STEEL Chemical & Material Co., Ltd.).
E-4: indicates the $SiO_2$ content (g) in the composition.
E-5: indicates the mass (g) of a thermosetting agent added as a mixture of methyl hexahydrophthalic anhydride (Me-HHPA) and hexahydrophthalic anhydride (HHPA).
E-6: indicates the mass (g) of a thermosetting agent added as a 3,3'-diethyl-4,4'-diaminodiphenylmethane (product name Kayahard AA, commercially available from Nippon Kayaku Co., Ltd.).
E-7: indicates the mass (g) of a thermosetting agent added as diethyltoluenediamine (product name ETHACURE 100, commercially available from Albemarle Corporation).
E-8: indicates the mass (g) of a thermosetting promoting agent added as dimethylbenzylamine.
E-9: indicates thermosetting conditions.
E-10: indicates the glass transition temperature (°C).
E-11: indicates the coefficient of linear thermal expansion ($10^{-6}$/K) at a glass transition temperature or lower.
E-12: indicates the coefficient of linear thermal expansion ($10^{-6}$/K) at a glass transition temperature or higher.
E-13: indicates the bending strength (MPa).
E-14: indicates the bending elastic modulus (MPa).
E-15: indicates the transmittance (%) of the cured product with a thickness of 3 mm.

IV [Photocured film containing epoxy group-containing silica particles]

The silica sol using the organic substance having a carbonyl structure as a dispersion medium in the process (D) in Example 3 and Example 5 was mixed with an alicyclic epoxy resin monomer (Celloxide 2021P: commercially available from Daicel Corporation), and a triarylsulfonium $SbF_6$ salt-based photocationic polymerization initiator (product name CPI101A, the structure of Formula (A-2), commercially available from San-Apro Ltd.) as a photoacid generator to obtain a silica-containing epoxy resin curing composition. The obtained silica-containing epoxy resin curing composition was applied to a substrate (made of polyethylene terephthalate and with a thickness of 125 $\mu$m) using a bar coater, then dried at 70°C for 5 minutes, and then cured by emitting ultraviolet light at a light intensity of 500 mJ/cm$^2$ using a UV curing belt conveyor device (product name ECS-4011GX, commercially available from Eye Graphics Co., Ltd.) equipped with a metal halide lamp (product name M04-01L, commercially available from Eye Graphics Co., Ltd.). Then, the obtained film was post-baked at 100°C for 30 minutes to obtain a film with a silica-containing epoxy resin photocured film.
Here, as Reference Example 2, an alicyclic epoxy resin monomer (Celloxide 2021P: commercially available from Daicel Corporation) and a triarylsulfonium $SbF_6$ salt-based photocationic polymerization initiator (product name CPI101A, the structure of Formula (A-2), commercially available from San-Apro Ltd.) as a photoacid generator were mixed to obtain an epoxy resin photocuring composition containing no silica sol, and coating, photocuring, and post baking were then performed in the same manner to obtain a film with an epoxy resin photocured film.
The method of measuring physical properties of the photocured film is shown below.

·Film thickness: measured using a film thickness measurement system (product name F20-EXR, commercially available from Filmetrics, Inc.).
·Pencil hardness: measured using a pencil scratch hardness tester (product name 553-S, commercially available from Yasuda Seiki Seisakusho, Ltd.) according to JIS K 5600-5-4.
·HAZE value: measured using a haze meter (product name NDH-5000, commercially available from Nippon Denshoku Industries Co., Ltd.) according to JIS K 7105.

·Bending resistance test: this is a bending resistance test according to JIS K5600-5-1, the mandrel was changed to a smaller one until cracking or peeling of the coating film occurred, and the diameter (mm) of the mandrel when cracking or peeling occurred for the first time was measured using a cylindrical mandrel bending tester (commercially available from Allgood Co., Ltd.).

Table 6 shows the epoxy resin compositions using the silica sol using the organic substance having a carbonyl structure as a dispersion medium in Example 3 and Example 5, the epoxy resin compositions containing no silica sol of Reference Example 3, and formations and photocuring physical properties thereof.

[Table 6]

| Raw material organosol | Example 3 | Example 5 | Reference Example 3 |
|---|---|---|---|
| F-1 | 5.0 | 5.0 | None |
| F-2 | 3.0 | 3.0 | 3.0 |
| F-3 | 0.03 | 0.03 | 0.03 |
| F-4 | 50 | 50 | 0 |
| F-5 | 7 | 7 | 7 |
| F-6 | 3 to 4 H | 4 H | 2 H |
| F-7 | 0.5 | 0.7 | 0.6 |
| F-8 | 2 mm or less | 2 mm or less | 2 mm or less |

F-1: indicates the mass (g) of the silica sol added using the organic substance having a carbonyl structure as a dispersion medium in the process (D) in Example 3 and Example 5.
F-2: indicates the mass (g) of the alicyclic epoxy resin monomer added (Celloxide 2021P: commercially available from Daicel Corporation).
F-3: indicates the mass (g) of the photoacid generator added (product name CPI101A, the structure of Formula (A-2), commercially available from San-Apro Ltd.).
F-4: indicates the $SiO_2$ content in the composition, expressed by phr (mass%).
F-5: indicates the film thickness ($\mu$m) of the photocured film on the substrate.
F-6: indicates the value of the pencil hardness of the photocured film.
F-7: indicates the HAZE value of the film.
F-8: indicates the result of the bending resistance test.

INDUSTRIAL APPLICABILITY

It is possible to obtain a silica sol that contains silica particles containing an epoxy group or an epoxy group-containing organic group, and an alkoxy group as dispersoids, and that is stably dispersed in an organic solvent, and a cured product-forming composition and an epoxy cured product containing this silica sol.

## Claims

**1.** A silica sol that contains silica particles containing an epoxy group or an epoxy group-containing organic group ($R^2$), and an alkoxy group ($OR^1$), and having an average primary particle diameter of 5 to 100 nm determined by a nitrogen gas adsorption method (BET method) as dispersoids, contains an organic substance as a dispersion medium, and also contains a basic substance,

wherein, when an average particle diameter of the silica particles determined by a dynamic light scattering method (DLS method) is 5 to 200 nm, a ratio of (average particle diameter determined by the DLS method)/(average primary particle diameter determined by the BET method) is 1.05 to 2.00,
wherein the silica particles contain 0.1 to 6.0 epoxy groups or epoxy group-containing organic groups ($R^2$)/$nm^2$ per unit area of a surface of the silica particles, and
wherein the silica particles contain 0.3 to 4.0 alkoxy groups ($OR^1$)/$nm^2$ per unit area of the surface of the silica particles, and a molar ratio ($R^2$)/($OR^1$) is 0.1 to 2.0.

2. The silica sol according to claim 1, wherein the average particle diameter of the silica particles determined by the dynamic light scattering method after storage at 50°C for 7 days is in a range of 1.0 to 1.2 times a value before storage.

3. The silica sol according to claim 1 or 2, wherein the epoxy group is a glycidyl group or a 3,4-epoxycyclohexyl group.

4. The silica sol according to any one of claims 1 to 3, wherein the dispersion medium is an organic substance having a carbonyl structure or an organic substance having an epoxy group.

5. The silica sol according to claim 4, wherein the organic substance having a carbonyl structure in the dispersion medium is methyl ethyl ketone, methyl isobutyl ketone, diisopropyl ketone, diisobutyl ketone, cyclohexanone, ethyl acetate, butyl acetate, or propylene glycol monomethyl ether acetate.

6. The silica sol according to claim 4, wherein the organic substance having an epoxy group in the dispersion medium is a bisphenol A liquid epoxy compound, a bisphenol F liquid epoxy compound, or 3',4'-epoxycyclohexylmethyl 3',4'-epoxycyclohexanecarboxylate.

7. The silica sol according to any one of claims 1 to 6, wherein the basic substance is an amine, ammonia, an inorganic alkaline compound, or a quaternary ammonium compound.

8. The silica sol according to claim 7, wherein the amine is a secondary amine or tertiary amine having a total number of carbon atoms of 5 to 35.

9. The silica sol according to any one of claims 1 to 8, wherein the silica particles further include a hydrolysate of at least one silane compound selected from the group consisting of Formula (1) to Formula (3):

$$R^3_aSi(R^4)_{4-a} \quad \text{Formula (1)}$$

$$[R^5_bSi(R^6)_{3-b}]_2Y_c \quad \text{Formula (2)}$$

$$R^7a\ Si(R^8)_{4-d} \quad \text{Formula (3)}$$

(in Formula (1), each $R^3$ is an alkyl group, a halogenated alkyl group, an alkenyl group, an aryl group, or an organic group having a (meth)acryloyl group, a mercapto group, an amino group, a ureido group, or a cyano group, and is bonded to a silicon atom through a Si-C bond, each $R^4$ is an alkoxy group, an acyloxy group, or a halogen group, and a is an integer of 1 to 3, and
in Formula (2) and Formula (3), each of $R^5$ and $R^7$ is a $C_{1-3}$ alkyl group or a $C_{6-30}$ aryl group and is bonded to a silicon atom through a Si-C bond, each of $R^6$ and $R^8$ is an alkoxy group, an acyloxy group, or a halogen group, Y is an alkylene group, an NH group, or an oxygen atom, b is an integer of 1 to 3, c is an integer of 0 or 1, and d is an integer of 1 to 3).

10. The silica sol according to any one of claims 1 to 8, wherein the silane compound according to claim 9 is a silane compound of Formula (1) (wherein, $R^3$ is an organic group having an aryl group and is bonded to a silicon atom through a Si-C bond, each $R^4$ is an alkoxy group, an acyloxy group, or a halogen group, and a is an integer of 1 to 3).

11. The silica sol according to any one of claims 1 to 10, wherein the silica particles as the dispersoids contain aluminum atoms in terms of $Al_2O_3$ in a proportion of 800 to 10, 000 ppm/$SiO_2$.

12. A production method of the silica sol according to any one of claims 1 to 11, comprising the following process (A) to process (D):

a process (A): a process of obtaining a silica sol in which silica particles having an average particle diameter of 5 to 200 nm determined by a dynamic light scattering method (DLS method) are dispersed in an alcohol $R^1OH$ (provided that $R^1$ is a $C_{1-10}$ organic group, which arbitrarily has an oxygen atom), wherein the silica sol has a water content of 5% by mass or less,
a process (B): a process of adding a basic substance to the silica sol obtained in the process (A),
a process (C): a process of adding a silane compound having an epoxy group or an epoxy group-containing organic group ($R^2$) to the silica sol obtained in the process (B) to cover the silica particles, and
a process (D): a process of substituting the alcohol $R^1OH$ with an organic substance having a carbonyl structure

or an organic substance having an epoxy group as the dispersion medium in the silica sol obtained in the process (C).

**13.** The production method according to claim 12, wherein, in the process (C), additionally, at least one silane compound selected from the group consisting of Formula (1) to Formula (3) is added to cover the silica particles.

**14.** The production method according to claim 12 or 13, wherein, in the process (D), the alcohol $R^1OH$ is substituted with the organic substance having a carbonyl structure as the dispersion medium, and then additionally substituted with the organic substance having an epoxy group.

**15.** A cured product-forming composition containing the silica sol according to any one of claims 1 to 11, an amine-based curing agent, an acid anhydride-based curing agent, or an acid generator-based curing agent.

**16.** The cured product-forming composition according to claim 15, further comprising an epoxy resin.

## INTERNATIONAL SEARCH REPORT

International application No.
**PCT/JP2022/031107**

**A. CLASSIFICATION OF SUBJECT MATTER**

***C01B 33/145***(2006.01)i; ***C08G 59/42***(2006.01)i; ***C08G 77/14***(2006.01)i; ***C08L 101/10***(2006.01)i; ***C08L 63/00***(2006.01)i
FI: C01B33/145; C08L63/00 C; C08L101/10; C08G59/42; C08G77/14

According to International Patent Classification (IPC) or to both national classification and IPC

**B. FIELDS SEARCHED**

Minimum documentation searched (classification system followed by classification symbols)

C01B33/00; C08G; C08L

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/188934 A1 (NISSAN CHEMICAL INDUSTRIES, LTD.) 27 November 2014 (2014-11-27)<br>paragraphs [0073]-[0114] | 1-10, 12-16 |
| Y | paragraphs [0073]-[0114] | 11 |
| Y | JP 2011-26183 A (JGC CATALYSTS & CHEMICALS LTD.) 10 February 2011 (2011-02-10)<br>paragraphs [0028]-[0029] | 11 |
| A | WO 2020/230823 A1 (NISSAN CHEMICAL CORP.) 19 November 2020 (2020-11-19)<br>entire text | 1-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/031107**

| Patent document cited in search report | Publication date (day/month/year) | Patent family member(s) | Publication date (day/month/year) |
|---|---|---|---|
| WO 2014/188934 A1 | 27 November 2014 | US 2016/0068664 A1<br>paragraphs [0088]-[0131]<br>EP 3000784 A1<br>CN 105263860 A<br>KR 10-2016-0010556 A<br>TW 201509809 A | |
| JP 2011-26183 A | 10 February 2011 | US 2012/0103231 A1<br>paragraphs [0024], [0057]<br>US 2015/0225609 A1<br>WO 2010/150677 A1<br>EP 2447211 A1<br>CN 102803141 A | |
| WO 2020/230823 A1 | 19 November 2020 | US 2021/0309834 A1<br>whole document<br>EP 3845490 A1<br>KR 10-2021-0046072 A<br>CN 112888657 A<br>TW 202106624 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010058754 A
- WO 2009008509 A